# EUROPEAN PATENT SPECIFICATION

(11) **EP 3 340 442 B1**
(45) Date of publication and mention of the grant of the patent: **01.05.2019**
(21) Application number: 16836861.1
(22) Date of filing: 15.06.2016
(51) Int. Cl.: H02K 7/18, B63B 22/00, B63B 35/00, F03B 3/14, F03B 13/26, H02J 3/38

(54) **SUBSEA BUOY**
UNTERWASSERBOJE
BOUÉE SOUS-MARINE

(30) Priority: 20.08.2015 JP 2015162717
(43) Date of publication of application: 27.06.2018
(73) Proprietor: Kobelco Research Institute, Inc., Kobe-shi, Hyogo 651-0073 (JP)
(72) Inventor: INOUE, Kenichi, HYOGO 651-2271 (JP); ITO, Yutaka, HYOGO 651-2271 (JP); TAKAGI, Nobuyoshi, HYOGO 651-2271 (JP); KURITANI, Kingo, MIYAGI 987-1305 (JP)
(74) Representative: Müller-Boré & Partner Patentanwälte PartG mbB
(86) International application number: PCT/JP2016/067856
(87) International publication number: WO 2017/029869

(56) References cited:
- JP-A- H11 252 893
- JP-A- 2003 312 586
- JP-A- 2009 143 331
- JP-A- 2009 544 265
- JP-A- 2016 100 970

## Description

### Technical Field

The present invention relates to a subsea buoy disposed under the sea to conduct wide-area and multipoint (fixed-point) monitoring in order to monitor, for example, marine environment (including a CO₂ concentration, PH, etc.), fishing, and territory.

### Background Art

In recent years, there is an increasing demand for subsea buoys (sensors) suitable for various applications for monitoring, for example, water temperature, water quality, tidal wave, and invasion of ships, aiming at marine resources development, fishing, natural disaster, territorial defense, and the like.

More specifically, with an increase of CO₂ in the air, global-scale weather changes have begun and man has been making efforts to reduce CO₂ emission. Much of atmospheric CO₂ is absorbed into the sea and fixed on a global scale to maintain a balance in fact. In view of the fact, it is also necessary to promote marine environmental preservation (nature conservation) or to make a research for actively increasing a CO₂ absorption capacity of the sea. Methods have been searched for which enable an increase of CO₂ absorption capacities in, for example, sea areas with less phytoplankton (e.g. the Antarctic Ocean or a sea area near the equator). However, concern about a possibility of disturbing ecosystem prevents implementation of such methods. For promoting an increase of a CO₂ absorption capacity of the sea on a global scale, a system is required which enables wide-area and multipoint (fixed-point) monitoring of marine environment (including a CO₂ concentration, PH, etc.).

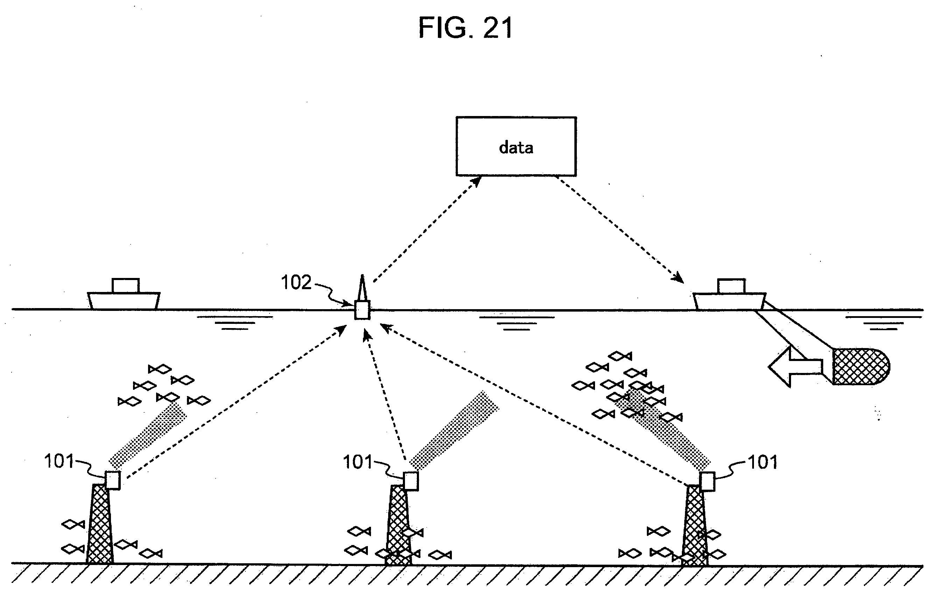

On the other hand, with a worldwide natural population growth and developing nations' thirst for improving their standard of living, marine energy resources and mineral resources are demanded. Fishing resources are attracting more and more interest as food. Conservation of these resources is a worldwide issue in negotiations. On the international waters, there occur problems of mining rights of marine resources (e.g. oil, natural gas) and fishing rights. It is necessary to prevent dispersion of marine pollution due to marine resource development and prevent overfishing on the international waters. These are reasons making a system necessary which enables wide-area and multipoint (fixed-point) monitoring. For example, as shown in FIG. 21, a conventional system has been known in which a subsea buoy 101 placed on a fish bank for rearing fish during growth monitors fish rearing environment and transmits rearing conditions to a float 102 floating on the sea by sound wave communication, from which float 102, data is sent to those involved in fishing who are on the land or on fishing boards by wireless. Since such a system helps efficient fishing according to fish growing conditions, as well as preventing overfishing, "fish farming/fish rearing" can be promoted. Also demanded is to realize a system which helps detection and monitoring of poaching vessels.

As there have occurred tidal waves one after another, which have been caused by earthquakes in the international waters, to do enormous damages to coast lines, seismological observation of the ocean's crust are gaining more and more importance. A system which enables wide-area and multipoint (fixed-point) monitoring is demanded also in this field.

The conventional subsea buoy 101 for use in such a system as described above is equipped with a battery which is changed at predetermined periods (e.g. one and a half years). However, when marine development is activated to increase the number of the subsea buoys 101 placed on the open sea (e.g. more than 500 subsea buoys), labor and costs for maintenance work are increased exponentially. Therefore, maintenance work such as battery change becomes impractical. The Ordinance on Safety and Health of Work under High Pressure was revised (Ministry of Health, Labour and Welfare, Ministry of Labour Ordinance No. 40, September 30, 1972, revised: Ministry of Health, Labour and Welfare Ordinance No. 132, December 1, 2014) in order to cope with a new decompression method for operation in a high-pressure room, diving operation, and the like. This has made simple professional diving work with compressed air be not allowed at water depths of 40 m or more, thereby making maintenance work at deep sea be special work requiring enormous costs. Accordingly, for the above-described subsea buoy, no need of maintenance becomes essential.

Document JP 2003 312586 is considered as the closest prior art and discloses a buoy comprising a power generation coil portion, a casing, a magnet, a magnet holding member and a water wheel. Patent Literature 1 discloses a chargeable submarine probe. The submarine probe includes a casing formed of a thick plate glass spherical body in which a power generator (onboard alternator) and a secondary battery are disposed, which secondary battery is charged in a noncontact manner by a charger configuring a facility on board. This submarine probe supplies electric power from inside to outside of the casing by a power feeder arranged inside the casing and a power receiver arranged outside the casing in a noncontact manner.

However, since the submarine probe in the above Patent Literature 1 includes the power generator having a mechanically operable mechanism and the secondary battery disposed in the casing, there might occur deterioration of the inside of the casing or failures therein. In addition, provision of the power generator and the secondary battery having an atmospheric pressure (normal pressure) specification in the casing makes the submarine probe large in scale as a whole.

This is because a submarine probe needs charging work to charge a secondary battery by a charger configuring a facility on board.

It is possible to transmit a magnetic joint formed of a magnet array annularly arranged outside a casing to a power generation coil portion by a turning force of a water wheel in a noncontact manner. However, the casing should be a pressure resistant container with a predetermined atmospheric pressure {(a water depth (m) of placement environment)/10}. In a case, for example, of water depths of 1000 m, a thick glass container with a thickness of several centimeters is used as a casing to considerably weaken magnetic coupling of the magnetic joint.

### Citation List

### Patent Literature

Patent Literature 1: Japanese Patent Unexamined Publication No. 2012-245944

### Summary of Invention

The present invention has been made in view of the above circumstances and aims to provide a subsea buoy with a plain and simple structure capable of independent power generation using a flow of a surrounding low-speed water current without requiring long-term maintenance.

A subsea buoy according to one aspect of the present invention includes: a power generation coil portion formed of a plurality of coil iron cores with coils wound around the coil iron cores; a casing which houses the power generation coil portion; a magnet array formed with a plurality of magnets arranged at a side opposite to the power generation coil portion with a part of a casing wall configuring the casing interposed therebetween so as to be magnetically coupled with the power generation coil portion; a magnet holding member which holds the magnet array; and a water wheel having a rotation shaft formed to be rotatable by a water current, in which the part of the casing wall is formed of a nonmagnetic and insulative material, or a material having a high electric resistance, and the magnet holding member is fixedly coupled to the rotation shaft. Here, a "material with a high electric resistance" denotes a material having an electric resistance of 1 kilohm meter (1kΩ·m) or more.

The subsea buoy according to the present invention has a plain and simple structure capable of independent power generation using a flow of a surrounding low-speed water current (underwater tidal current) without requiring long-term maintenance.

These and other objects, features, and advantages of the present invention will become apparent from the following detailed description and the accompanying drawings.

### Brief Description of Drawings

FIG. 1 is a perspective view showing a configuration of a subsea buoy of a first embodiment.
FIG. 2 is a sectional view showing a main part of the subsea buoy of the first embodiment.
FIG. 3A is a perspective view showing a water wheel of the subsea buoy of the first embodiment.
FIG. 3B is a plan view of FIG. 3A.
FIG. 3C is a perspective view showing a modification example of the water wheel.
FIG. 3D is a plan view of FIG. 3C.
FIG. 4 is a sectional view for explaining a magnet array and a power generation coil portion of the subsea buoy of the first embodiment.
FIG. 5 is a sectional view of the power generation coil portion of the first embodiment.
FIG. 6 is a plan view of a modification example of a stator side yoke.
FIG 7A is a perspective view showing a main part of a subsea buoy of a second embodiment.
FIG. 7B is a plan view showing a main part of the subsea buoy of the second embodiment.
FIG. 8 is a sectional view showing the main part of the subsea buoy of the second embodiment.
FIG. 9 is a sectional view showing a main part of a subsea buoy of a third embodiment.
FIG. 10 shows a sectional view for explaining a magnet array and a power generation coil portion of the subsea buoy (a state A) of the third embodiment, a sectional view of a state B in which the magnet array in the state A rotates with respect to the power generation coil portion, and a sectional view of a state C in which the magnet array in the state B further rotates with respect to the power generation coil portion.
FIG. 11 is a sectional view of the power generation coil portion of the third embodiment.
FIG. 12 shows a sectional view of a power generation coil portion (a state A) of a fourth embodiment, a sectional view of a state B in which a magnet array in the state A rotates with respect to the power generation coil portion, and a sectional view of a state C in which the magnet array in the state B further rotates with respect to the power generation coil portion.
FIG. 13 is a view for explaining a section of the power generation coil portion of the fourth embodiment.
FIG. 14 shows a sectional view of a power generation coil portion (a state A) of a fifth embodiment, a sectional view of a state B in which a magnet array in the state A rotates with respect to the power generation coil portion, and a sectional view of a state C in which the magnet array in the state B further rotates with respect to the power generation coil portion.
FIG. 15 is a sectional view of the power generation coil portion of the fifth embodiment.
FIG. 16 is a graph showing behavior of electromotive forces generated in the power generation coil portions of the third embodiment, the fourth embodiment, and the fifth embodiment.
FIG 17 shows a sectional view of a power generation coil portion (a state A) of a sixth embodiment, and a sectional view of a state B in which a magnet array in the state A rotates with respect to the power generation coil portion.
FIG. 18 shows a sectional view of a state C in which the magnet array in the state B shown in FIG. 17 further rotates with respect to the power generation coil portion, and a sectional view of a state D in which the magnet array in the state C further rotates with respect to the power generation coil portion.
FIG. 19 is a sectional view of the power generation coil portion of the sixth embodiment.
FIG 20 is a graph showing a penetrating magnetic flux and a combined electromotive force of a power generation coil of the sixth embodiment.
FIG. 21 is an explanatory view of a conventional marine monitoring system.

### Description of Embodiments

In the following, one embodiment according to the present invention will be described with reference to the accompanying drawings. In each drawing, components identified by the same reference signs represent the same components to appropriately omit description thereof. In the present specification, those collectively referred to will be identified by reference signs with subscripts omitted, and those representing individual components will be identified by reference signs with subscripts added.

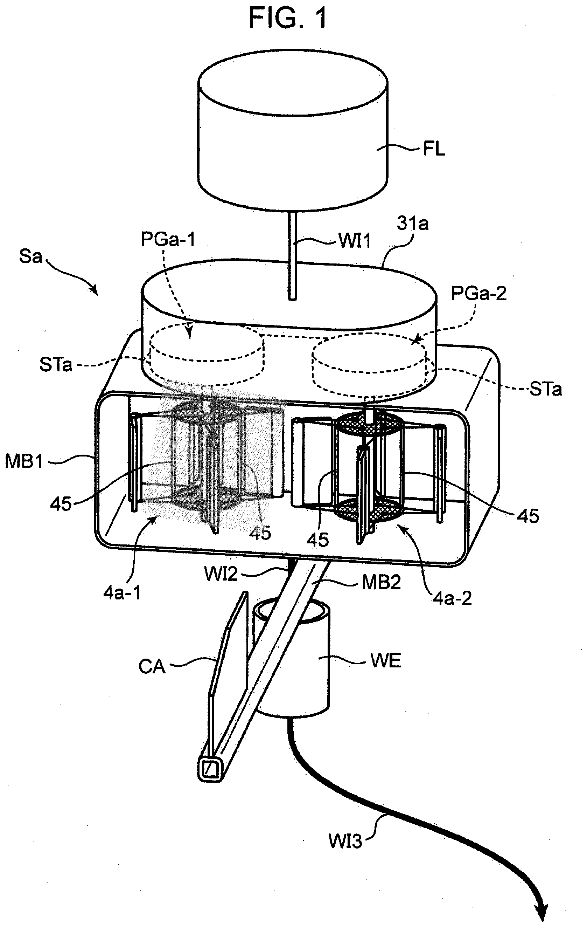

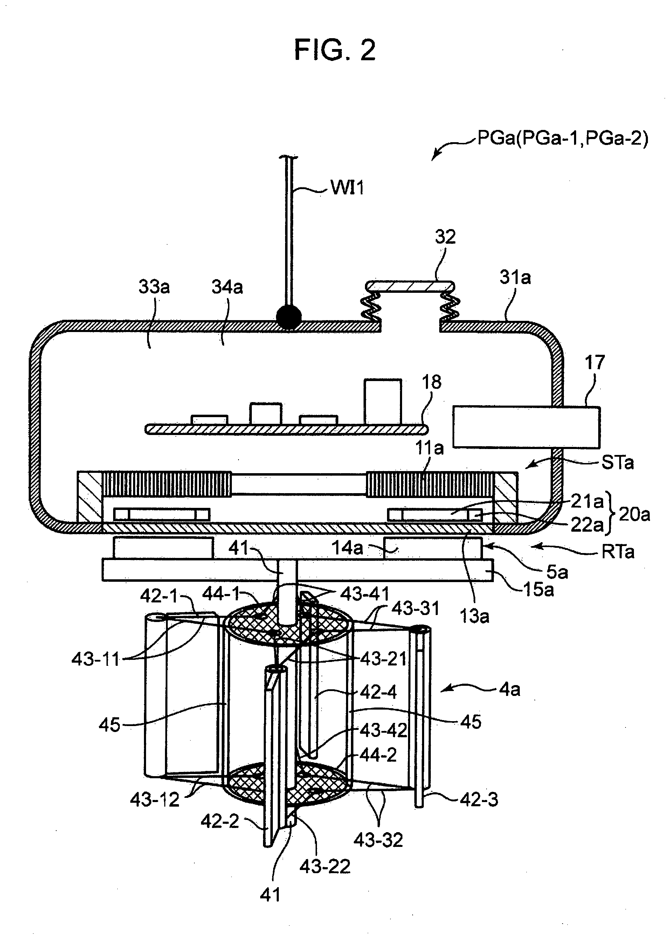

FIG. 1 is a perspective view showing a configuration of a subsea buoy of a first embodiment. FIG. 2 is a sectional view showing a main part of the subsea buoy of the first embodiment.

A subsea buoy Sa in the present embodiment is suitable for various applications for monitoring, for example, water temperature, water quality, tidal wave, invasion of ships, aiming at submarine resources development, fishing, natural disaster, territorial defense, and the like, and detailed description will be made in the following.

In FIG. 1, the subsea buoy Sa in the first embodiment includes a float FL, an axial gap type power generator (which is hereinafter abbreviated to "AG type power generator") PGa, a water wheel 4a, a tail CA, and a sinker WE.

The float FL, a device which generates buoyancy, is an airtight hollow columnar body formed of, for example, a metallic material. The float FL is coupled with the AG type power generator PGa by a first wire WI1 formed of, for example, a metallic material.

The water wheel 4a receives a flow of fluid to cause a rotation shaft 41 (illustrated in FIG. 2) to have rotational movement. The rotation shaft 41 is coupled with a magnet holding member of a rotor RTa of the AG type power generator PGa to be described later, and the rotational movement caused by the water wheel 4a is transmitted to the AG type power generator PGa via the rotation shaft 41 to cause the rotor RTa to rotate.

In this embodiment, the water wheel 4a includes, for example, two, first and second water wheels 4a-1 and 4a-2 as shown in FIG. 1. The first and second water wheels 4a-1 and 4a-2 are provided in parallel to each other in a first supporting body MB1 having a tubular-shape and a rectangular cross section so as to have each axis direction of the rotation shaft 41 aligned.

Each of the first and second water wheels 4a-1 and 4a-2 includes the one rotation shaft 41, four swirlers 42, abutting portions 45, spokes 43, and fixing members 44. Since the first water wheel 4a-1 and the second water wheel 4a-2 have the same shape, description thereof will be made without making distinctions therebetween in the following.

The rotation shaft 41 is a columnar member long in one direction, one end of which, as described above, is fixedly coupled with a magnet holding member 15a of the rotor RTa of the AG type power generator PGa.

The swirler 42, which is a member for receiving a flow (tidal current) of sea water and may be provided in an arbitrary number, includes four, first to fourth swirlers 42-1 to 42-4 in the example shown in Fig. 2.

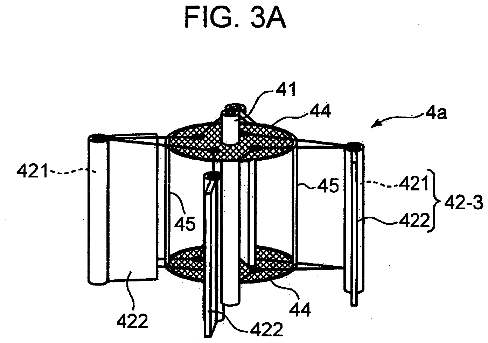

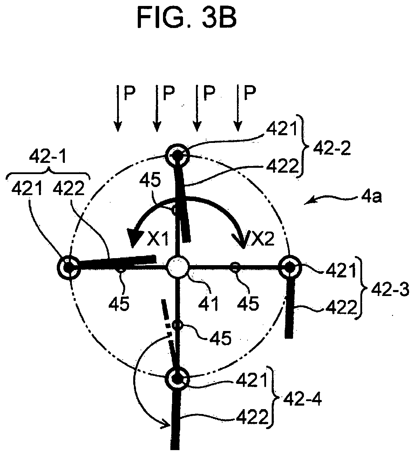

Each of the first to fourth swirlers 42-1 to 42-4 includes a holding shaft 421 having a columnar shape long in one direction, and a blade member 422 rotatably held to the holding shaft 421 as shown in FIG. 2, FIG. 3A, and FIG. 3B.

The holding shafts 421 are arranged at an outer side in a radial direction of the rotation shaft 41 so as to be spaced apart from the rotation shaft 41, at equal intervals in a circumferential direction of the rotation shaft 41.

Each blade member 422 has a flat plate-shape and the blade member 422 has one end in a width direction of the blade member 422 held to the holding shaft 421 so as to be rotatable around the holding shaft 421.

The abutting portion 45 has a columnar shape long in an axis direction or a pin-shape protruding from the fixing member 44 (side wall disk). The abutting portion 45 has a function of abutting the blade member 422 during rotation of the blade member 422 along with a flow of sea water to stop the rotation of the blade member 422. In this embodiment, the number of the abutting portions 45 is the same as that of the blade members 422 (four in this embodiment).

Each abutting portion 45 is fixedly held to the fixing member 44 in a state of being substantially parallel to the holding shaft 421 and at a position where a distance between the abutting portion 45 and the holding shaft 421 is shorter than a width size of the blade member 422. As a result, in the rotation of the blade member 422 along with a flow of sea water, the other end of the blade member 422 is abutted by the abutting portion 45.

The fixing member 44 is a member for coupling and fixing the holding shaft 421 to the rotation shaft 41 via the spoke 43. The fixing member 44 is, for example, a net-shape disk. In the present embodiment, the fixing member 44 includes, for example, a pair of first and second fixing members 44-1 and 44-2 (two fixing members 44) for supporting the holding shaft 421 at both end portions of the holding shaft 421 via the spoke 43 as shown in Fig. 2. The paired first and second fixing members 44-1 and 44-2 are each formed with a through-hole opening at a center position for allowing the rotation shaft 41 to be inserted therethrough. Then, the first fixing member 44-1 is fixed by insertion of the rotation shaft 41 through the through-hole opening. The second fixing member 44-2 is fixed by insertion of the rotation shaft 41 through the through-hole opening so as to have a predetermined interval from the first fixing member 44-1. The predetermined interval is an interval corresponding to a length along a rotation shaft direction between both end portions of the swirler 42.

The spoke 43 is a member for coupling the holding shaft 421 and the fixing member 44 with each other, and is a wire rod, for example. In the present embodiment, for example, one holding shaft 421 (FIG. 3A, FIG. 3B) couples, at both ends thereof, two pairs of spokes 43 (four spokes 43) as shown in Fig. 2. Corresponding to the four, the first to fourth swirlers 42-1 to 42-4, eight pairs of the 11th to 42th spokes 43-11 to 43-42 (16 spokes 43) are provided.

The pair of spokes 43 each has one end thereof coupled to the spoke 43 to be substantially V-shaped. The pair of spokes 43 is configured with two wire rods. In the 11th and 12th spokes 43-11 and 43-12, each substantially V-shaped coupling part is coupled and fixed to each one end portion of both end portions in the axis direction of the first swirler 42-1, the one end portion being orthogonal to the axis direction, so as to adjust an angle of the first swirler 42-1. In the 11th and 12th spokes 43-11 and 43-12, the substantially V-shaped tip parts are coupled and fixed to the first fixing member 44-1 and the second fixing member 44-2, respectively. The 21th and 22th spokes 43-21 and 43-22, the 31th and 32th spokes 43-31 and 43-32, and the 41th and 42th spokes 43-41 and 43-42 are also the same as the 11th and 12th spokes 43-11 and 43-12, respectively. Specifically, these pairs of spokes 43 are coupled and fixed to the second to fourth swirlers 42-2 to 42-4 and the first and second fixing members 44-1 and 44-2. The first to fourth swirlers 42-1 to 42-4 are disposed at equal intervals (at an interval of 360/4 = 90 degrees in the example shown in Fig. 2) in the circumferential direction by the 11th to 42th spokes 43-11 to 43-42 (16 spokes 43). Additionally, since the first to fourth swirlers 42-1 to 42-4 are coupled at the respective substantially V-shaped coupling parts of the 12th to 42th spokes 43-11 to 43-42 so as to have an adjustable angle, an angle to the rotation shaft 41 can be adjusted. The angle to the rotation shaft 41 is an angle formed by the rotation shaft 41, a plane formed by a rotation shaft as a shaft for rotation of the swirler 42 at the time of angle adjustment, and a plane of the swirler 42 having a flat plate-shape. This enables the water wheel 4a of the present embodiment to have an appropriate angle set according to a flow speed of a tidal current (e.g. a yearly average speed) (in FIG. 3B, illustration of the fixing member 44 and the spoke 43 are omitted).

As shown in FIG. 1, the tail CA is a member for directing the first and second water wheels 4a-1 and 4a-2 to a direction corresponding to a direction of a flow of a tidal current. The tail CA is, for example, a flat plate-shaped member, and a one end portion of the tail CA is coupled and fixed to a second supporting member MB2 at the other end of the second supporting member MB2, the second supporting member MB2 having a rectangular pillar shape long in one direction. Then, a one end of the second supporting member MB2 is coupled and fixed to a bottom surface of a first supporting member MB1 at a substantially central position in a parallel arrangement direction of the first and second water wheels 4a-1 and 4a-2 provided in parallel to each other.

The sinker WE is a member for sinking the first and second water wheels 4a-1 and 4a-2 and, for example, a columnar body having a predetermined weight. One end of the sinker WE is coupled to the first supporting member MB1 by a second wire WI2 formed of, for example, a metallic material. The other end of the sinker WE is coupled to a fixing means (not illustrated) such as an anchor by a third wire WI3 formed of, for example, a metallic material.

The respective members FL, WI1, MB1, 4a, MB2, CA, WI2, WE, and WI3 provided in the subsea buoy Sa are preferably formed of a material having high corrosion resistance, for example, stainless steel, reinforced plastic, carbon fiber.

With reference to FIG. 1 and FIG. 2, the first embodiment includes, as the AG type power generator PGa, two, first and second AG type power generators PGa-1 and PGa-2. The first AG type power generator PGa-1 corresponds to the first water wheel 4a-1. The second AG type power generator PGa-2 corresponds to the second water wheel 4a-2. The rotation shaft 41 of the first water wheel 4a-1 is coupled and fixed to the rotor RTa of the first AG type power generator PGa-1. The rotation shaft 41 of the second water wheel 4a-2 is coupled and fixed to the rotor RTa of the second AG type power generator PGa-2.

The first and second AG type power generators PGa-1 and PGa-2 each include a casing 31a, a stator STa, and the rotor RTa. Since these power generators are substantially the same except for a difference in part, description thereof will be made without making distinctions therebetween in the following.

As shown in Fig. 2, the casing 31a can be airtight, and is, for example, a hollow box body with a substantially rectangular solid shape which is internally provided with the stator STa. The casing 31a, which can be provided for each of the first and second AG type power generators PGa-1 and PGa-2, is provided in common for the first and second AG type power generators PGa-1 and PGa-2 in the present embodiment.

The subsea buoy Sa includes a filler 33a filing an inside 34a of the casing 31a, and a pressure adjustment mechanism 32 for eliminating a pressure difference between the inside and outside of the casing 31a.

The inside 34a of the casing 31a contains an information obtaining portion 17 so as to have a part thereof facing to the outside, and contains an electrical component 18. The information obtaining portion 17 is a device which obtains predetermined information, and is, for example, a camera for photographing a subsea condition, a water quality sensor for detecting water quality such as a salinity, and a water temperature sensor for detecting a water temperature. When requiring electric power for operation thereof, the information obtaining portion 17 is supplied with power from the AG type power generator PGa directly or via the electrical component 18. The electrical component 18 is a device which is supplied with power from the AG type power generator PGa to control the information obtaining portion 17, store information obtained by the information obtaining portion 17, and externally transmit the information at predetermined intervals. The electrical component 18 converts alternating-current power supplied from the AG type power generator PGa to electric power suitable for the information obtaining portion 17 as required. For example, the electrical component 18 converts alternating-current power to direct-current power or converts a voltage value to a predetermined value.

The filler 33a, which is made of non-compressive and insulative liquid such as oil, fully fills the inside 34a of the casing 31a.

The pressure adjustment mechanism 32 is configured, for example, with capacity adjustment bellows formed in a part of the casing 31a.

The casing 31a is coupled and fixed to the first supporting member MB1 such that a power generation coil portion 20a of the stator STa arranged on the inside 34a and a magnet array 5a of the rotor RTa coupled to the rotation shaft 41 of the water wheel 4a and arranged outside the casing 31a face each other.

Among casing walls of the casing 31a, at least a casing wall 13a (the casing wall interposed between the power generation coil portion 20a of the stator STa in the casing 31a and the magnet array 5a of the rotor RTa) is formed of a first material which is nonmagnetic and insulative or a second material having a high electric resistance value (electric resistance value of 1kΩ·m or more). As the first material of the casing wall 13a, preferable are, for example, ceramic, glass, glass fiber, and reinforced plastic. Metal having a relatively high specific resistance (e.g. stainless, titanium) can be adopted as the second material of the casing wall 13a as long as an eddy current loss due to a conductivity of metal is within an allowable range.

With reference to FIG. 2, the stator STa is a non-rotational part including the power generation coil portion 20a and a stator side yoke (back yoke) 11a. The power generation coil portion 20a includes a plurality of coil iron cores 21a and coils 22a wound around the coil iron cores 21a.

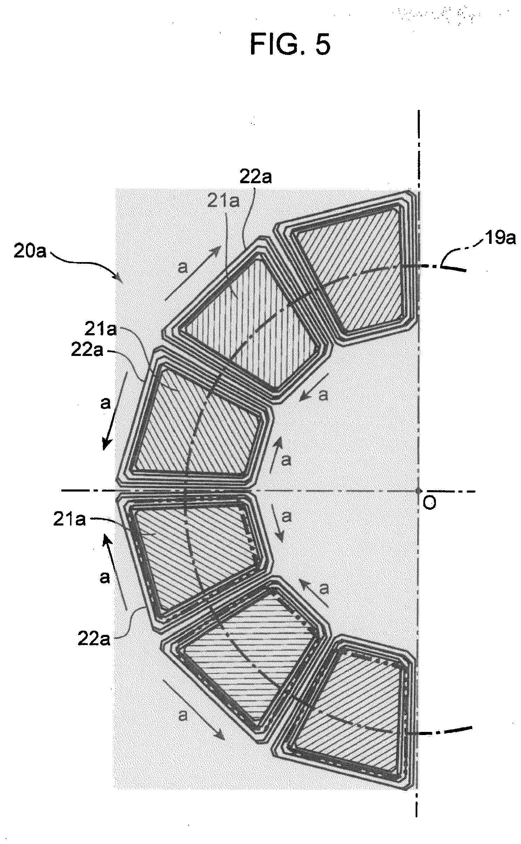

With reference to FIG. 5, the plurality of coil iron cores 21a are arranged evenly (at equal intervals) on a circumference of a predetermined pitch circle 19a in a circumferential direction. Each coil iron core 21a is configured with a magnetic material core whose cross section is trapezoidal.

The coils 22a are each formed of, for example, a tape-shaped (thin strip) conductor, and flatwise wound around each of the coil iron cores 21a.

In the present embodiment, the coils 22a are connected in series by wires wound around two coil iron cores 21a adjacent to each other in a circumferential direction so as to have winding directions a reverse to each other.

With reference to FIG. 2, the stator side yoke 11a can be implemented in various forms. The stator side yoke 11a may, for example, have a single pan cake structure including long strip-shaped electromagnetic soft iron or pure iron which is wound around in the manner of coils and whose width in a coil axis direction is larger than a thickness in a coil radial direction, and an insulation member arranged between respective turns in the strip-shaped electromagnetic soft iron or pure iron wound around in the manner of coils. The stator side yoke 11a may, for example, be formed by winding long strip-shaped electromagnetic soft iron or pure iron around so as to have a width direction in parallel to the coil axis direction, the long strip-shaped electromagnetic soft iron or pure iron having insulation coating of an insulative resin or the like on one side or both sides and having a width in the coil axis direction larger than a thickness in the coil radial direction. The stator side yoke 11a may, for example, be formed by winding a long strip-shaped member with a one-layer insulation layer laminated on a one-layer electromagnetic soft iron layer or one-layer pure iron layer around so as to have the width direction in parallel to the coil axis direction. The stator side yoke 11a may, for example, be formed by winding long strip-shaped electromagnetic soft iron or pure iron around so as to have the width direction in parallel to the coil axis direction while sandwiching a long strip-shaped insulation member (e.g. a tape formed of a resin material). The tape formed of a resin material is, for example, a tape of polyethylene naphthalate (PEN).

The stator side yoke 11a thus formed is arranged at a side opposite to the magnet array 5a of the rotor RTa with the power generation coil portion 20a in the casing 31a interposed therebetween.

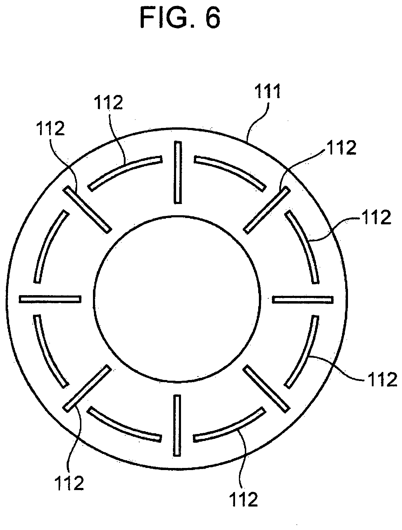

The stator side yoke is not limited to that wound around in the manner of coils and can be appropriately modified. For example, as shown in FIG 6, a stator side yoke 111 may be a ring-shaped plate member formed of a magnetic material. The stator side yoke 111 may be, for example, a member formed by compression-molding soft magnetic powder having an insulation coating. Such stator side yoke 111 has magnetic isotropy. For example, magnetic permeability is isotropic. The soft magnetic powder is ferromagnetic metallic powder, and more specifically, for example, pure iron powder, iron-based alloy powder (Fe-Al alloy, Fe-Si alloy, sendust, permalloy, etc.), and amorphous powder. These kinds of soft magnetic powder can be produced by a method, for example, of pulverization by an atomization method or the like, a method of reducing iron oxide or the like after pulverization. Additionally, soft magnetic powder is preferably, in particular, a metal-based material such as the pure iron powder, iron-based alloy powder, and amorphous powder because in general, these materials have a high saturated magnetic flux density when magnetic permeability is the same. The stator side yoke 111 obtained by compression-molding soft magnetic powder having such an insulation coating can be formed, for example, by known conventional means such as compacting in a case of producing a so-called dust core.

The stator side yoke 111 formed of such a dust core is allowed to have magnetic properties controlled by a particle size of powder thereof or a particle size distribution, and a mold density, or the like. For example, it is possible to increase magnetic permeability by increasing a mold density and to suppress an eddy current loss by reducing a particle size of powder. Therefore, for realizing electromagnetic properties required of the stator side yoke 111, a particle size of powder for use in a compact, a mold density and the like are adjusted.

When the stator side yoke 111 is formed of a ring-shaped plate body, it is preferable to include slits 112 extending in at least one direction of a radial direction (radiation direction) and a circumferential direction as shown in FIG. 6 (FIG. 6 illustrates the slits 112 extending in both the radial direction and the circumferential direction).

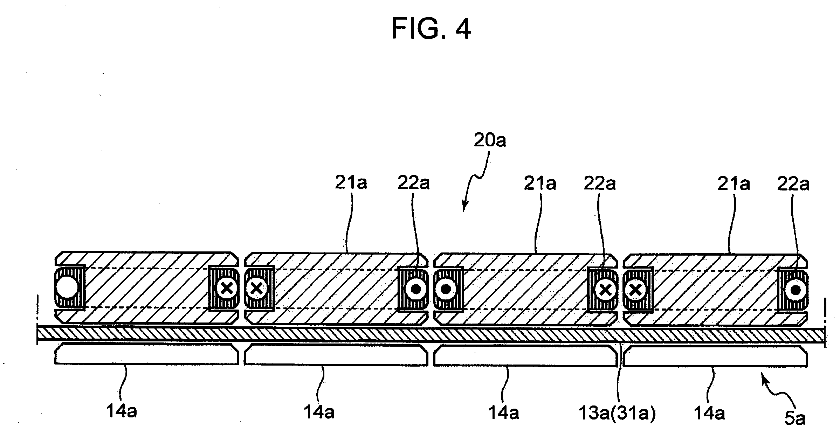

With reference to FIG. 2 and FIG. 4, the rotor RTa is a rotation part which includes the magnet array 5a formed with a plurality of magnets 14a, and the magnet holding member 15a holding the magnet array 5a. The magnet holding member 15a has a function of a rotor side yoke.

The magnet holding member 15a is a disk-shaped member configured with a magnetic material. The magnet holding member 15a has a through-hole opening through which the rotation shaft 41 of the water wheel 4a is inserted, at a center position of the magnet holding member 15a. The rotation shaft 41 of the water wheel 4a is inserted into the through-hole opening and fixed. As a result, the rotor RTa is coupled and fixed to the rotation shaft 41 of the water wheel 4a.

The plurality of magnets 14a is a magnet, for example, a permanent magnet, for generating a magnetic field to interact with the power generation coil portion 20a, thereby causing the power generation coil portion 20a to generate an induced electromotive force. In this embodiment, the magnets 14a are provided in the same number as that of the coil iron cores 21a and evenly arranged (arranged at equal intervals) on one main surface of the magnet holding member 15a and on the circumference of the pitch circle 19a (illustrated in FIG 5) in the circumferential direction, thereby forming the magnet array 5a having a circular shape. The magnet array 5a is arranged, while being held by the magnet holding member 15a, on a side opposite to the power generation coil portion 20a with a part of the casing wall 13a interposed therebetween.

Each of the plurality of magnets 14a is magnetized in an axis direction (thickness direction), and the magnets 14a adjacent to each other are arranged to have magnetic poles thereof opposite to each other. When the magnet holding member 15a rotates along with rotation of the rotation shaft 41 of the water wheel 4a, such plurality of magnets 14a rotates together with the rotation shaft 41.

With reference to FIG. 1 and FIG 2, the subsea buoy Sa of the first embodiment mounted with the foregoing described AG type power generator PGa is arranged on the sea so as to be substantially fixed at a position of predetermined longitude and latitude by the second wire WI2, the sinker WE, and the third wire WI3, and such that the first and second water wheels 4a-1 and 4a-2 are located at a predetermined depth (e.g. a water depth of 40 m or more) by balance between buoyancy of the float FL and weight of the sinker WE. In the subsea buoy Sa arranged on the sea, as a result of movement of the tail CA to follow a direction in which a tidal current flows, from an opening at one end of the first supporting member MB1, the tidal current flows-in, the flowing-in tidal current pushes the respective swirlers 42 of the first and second water wheels 4a-1 and 4a-2, and the tidal current flows out from an opening of the other end of the first supporting member MB1. Pushing the respective swirlers 42 of the first and second water wheels 4a-1 and 4a-2 by the flowing-in tidal current causes the respective rotation shafts 41 of the first and second water wheels 4a-1 and 4a-2 to rotate.

On this occasion, as shown in FIG. 3A and FIG. 3B, the blade member 422 of the water wheel 4a is rotatably held to the holding shaft 421, and in the rotation of the blade member 422 along with a flow of sea water, one blade member 422 (the blade member 422 on the left side in the figure) is abutted to the abutting portion 45 in a state of being substantially vertical to a water current P, so that the other three blade members 422 become substantially parallel to the water current P. Accordingly, the one blade member 422 which is substantially vertical receives a turning force to a side of a one direction X1 (counterclockwise direction) as shown in FIG. 3B and the other three blade members 422 barely receive a turning force to a side of the other direction X2 (the direction opposite to the one direction XI), that is, a resistance to rotation in the one direction X1 side.

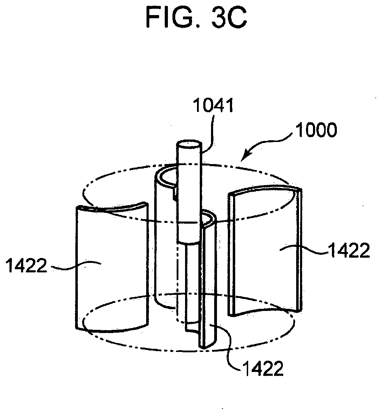

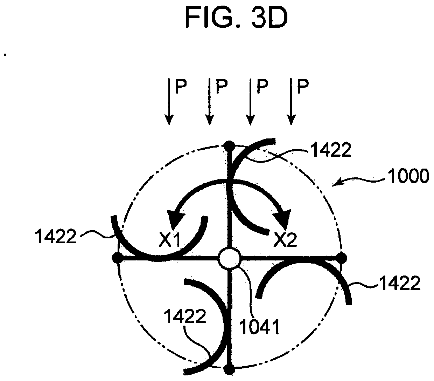

Accordingly, for example, as compared with such a Savonius water wheel 1000 having swirlers 1422 as shown in FIG 3C and FIG. 3D, the water wheel 4a of this embodiment is capable of rotating smoothly with a small force. More specifically, each of the swirlers 1422 of the Savonius water wheel 1000 shown in FIG. 3C and FIG. 3D has a bowl-shape with a concave and a convex and is fixedly held to a rotation shaft 1041. In Savonius water wheel 1000, during rotation of a swirler 1422 following a flow of sea water, the swirler 1422 on the left side of FIG. 3D receives the water current P by a concave surface to receive a turning force to the one direction X1 side. On the other hand, against the water current P, the other three swirlers 1422 receive a turning force to the other direction X2 side by a convex surface, that is, receive more resistance to rotation to the one direction X1 side than the water wheel 4a of the present embodiment does. Accordingly, as compared with the Savonius water wheel 1000 having the swirler 1422, the water wheel 4a of this embodiment is capable of smoothly rotating with a small force at a low flow speed. In this regard, it is more preferable to use the water wheel 4a of this embodiment than to use the Savonius water wheel 1000 having the swirler 1422. It is, however, also possible to use the Savonius water wheel 1000 as shown in FIG. 3C and FIG. 3D and to appropriately change the use.

With reference to FIG. 1 and FIG. 2, each rotational movement of each rotation shaft 41 is transmitted to each rotor RTa in each of the first and second AG type power generators PGa-1 and PGa-2.

In each of the first and second AG type power generators PGa-1 and PGa-2, rotation of each rotor RTa causes each magnet 14a to move relative to the power generation coil portion 20a of each stator STa. This generates an induced electromotive force in the power generation coil portion 20a of each stator STa, so that the first and second AG type power generators PGa-1 and PGa-2 generate power.

On this occasion, through the casing wall 13a between the magnet array 5a and the power generation coil portion 20a, an alternating current magnetic field passes. Since the casing wall 13a is formed of a nonmagnetic and insulative material or a material with a high electric resistance, an electric power loss due to hysteresis or eddy current hardly occurs.

The inside 34a of the casing 31a is filled with the filler 33a made of non-compressive fluid, and the casing 31a includes the pressure adjustment mechanism 32 which adjusts a pressure of the inside 34a. Therefore, when the subsea buoy Sa is sunk 40 m or more down into the sea (e.g. deep sea having a 1 km water depth), inside and outside pressures of the casing 31a are always maintained to be constant. This eliminates the need of the casing wall 13a to be a pressure resistant container made of thick high-strength metal. As long as having corrosion resistance to environment sea water, the casing wall 13a should not necessarily be made of metal. Since a relatively thin member is sufficient for use as the casing wall 13a, the subsea buoy can be made light and inexpensive as a whole.

Since the inside and outside pressures of the casing 31a are always maintained to be constant, the casing wall 13a between the magnet array 5a and the power generation coil portion 20a in the casing 31a can be made thin. This enables the magnet array 5a outside the casing 31a and the power generation coil portion 20a inside thereof to come close to each other, so that a distance between the magnet array 5a and the power generation coil portion 20a is reduced. Thus, magnetic coupling between the magnet array 5a and the power generation coil portion 20a is strengthened to increase power generation efficiency.

As described in the foregoing, the subsea buoy Sa of the first embodiment is allowed to supply electric power by independent power generation by, for example, rotating the rotation shaft 41 of the water wheel 4a by a tidal current present surrounding a worksite, which rotation is followed by rotation of the magnet holding member 15a that holds the magnet array 5a together with the rotation shaft 41. This enables substantially permanent measurement and monitoring of the subsea buoy Sa of the first embodiment without maintenance.

By an alternating current magnetic field generated by the water wheel 4a placed outside of the casing 31a in a completely airtight state, electric power can be generated inside the casing 31a in a non-contact manner. This enables size reduction of the subsea buoy Sa. Additionally, since the inside of the casing 31a has no mechanism that operates mechanically, deterioration and failures inside the casing 31a are minimized, which eliminates a need of maintenance.

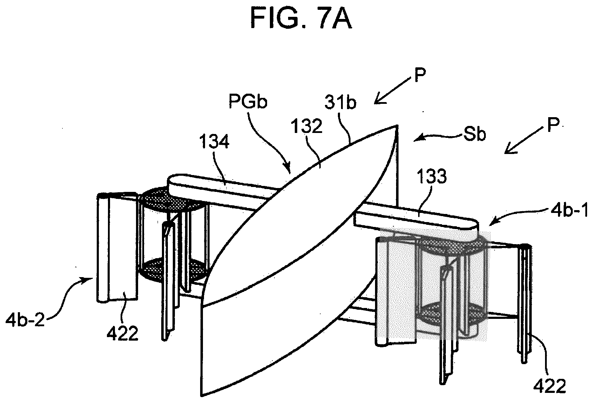

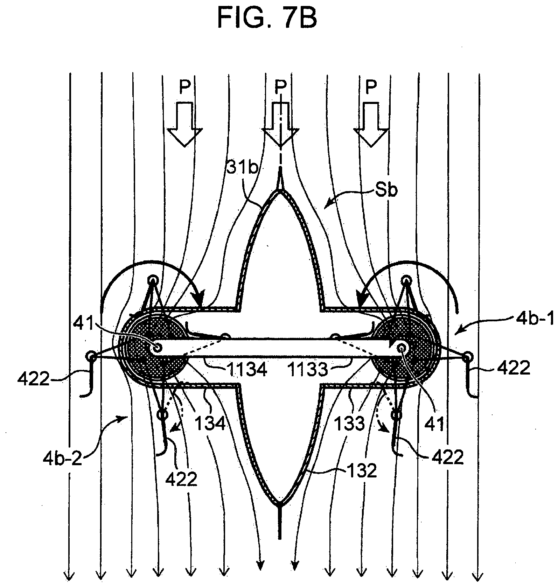

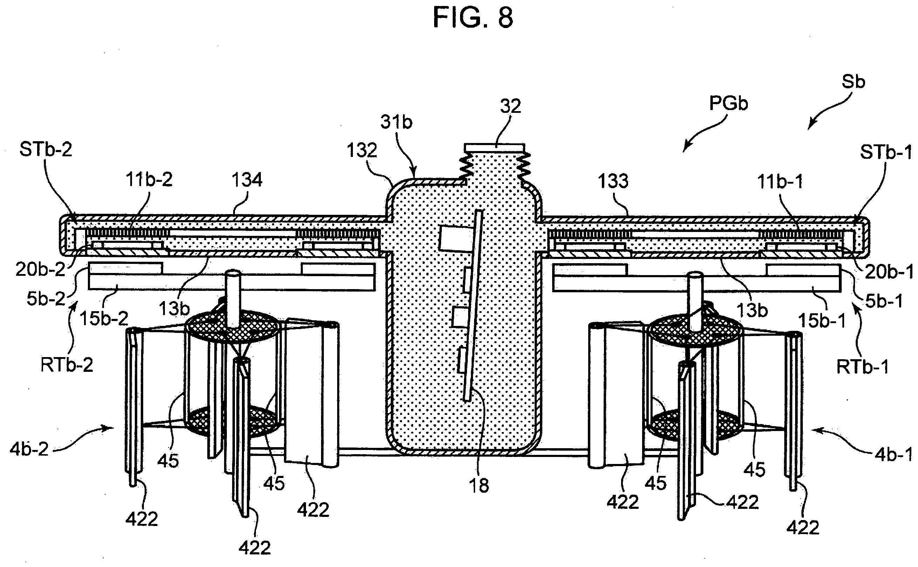

A second embodiment will be described with reference to FIG. 7A, FIG 7B and FIG. 8. A subsea buoy Sb of the second embodiment, similarly to the first embodiment, includes a float, an AG type power generator PGb, water wheels 4b-1 and 4b-2, a tail, and a sinker (in FIG. 7A, FIG 7B, and FIG 8, illustration of the float, the tail, and the sinker is omitted). The float, the tail, and the sinker have the same configurations as those provided in the first embodiment.

The AG type power generator PGb of the second embodiment includes a casing 31b, a stator STb, and a rotor RTb.

The casing 31b of the second embodiment includes a casing main body portion 132, and projection portions (a first projection portion 133 and a second projection portion 134) projecting from the casing main body portion 132.

The casing main body portion 132 is formed to have a width gradually narrowing from a center part of the casing main body portion 132 to one end side and the other end side in a longitudinal direction in plan view and to have one end side front and the other end side front each pointed.

The casing main body portion 132 includes an information obtaining portion and a pressure adjustment mechanism 32, and houses an electrical component 18 therein. The information obtaining portion, the pressure adjustment mechanism 32, and the electrical component 18 have substantially the same configurations as those provided in the first embodiment.

The second embodiment includes, as the projection portion, the first projection portion 133 integrally projecting from the center part of an upper end side of the casing main body portion 132 to one side in a width direction, and the second projection portion 134 projecting to the other side in the width direction in plan view. In FIG. 7A, for showing a configuration in which two water wheels (the first water wheel 4b-1 and the second water wheel 4b-2) are arranged at the right and left of the casing main body portion 132 with respect to a water current, the water wheels making a pair rotating in direction opposite to each other, the first projection portion 133 and the second projection portion 134 are illustrated to have a small width. On the other hand, since FIG. 7B is a view for explaining the projection portions 133 and 134 of the casing which houses the stator of the power generator, the projection portions being magnetically coupled to the rotors of the respective water wheels, the first projection portion 133 has a width size which enables a stator STb-1 having an annular shape (FIG. 8) to be housed in the first projection portion 133, and the second projection portion 134 has a width size which enables a stator STb-2 having an annular shape (FIG. 8) to be housed in the second projection portion 134. In FIG. 7B, there are shown a member indicated by a reference sign 1133 corresponding to the first projection portion 133 of FIG. 7A, and a member indicated by a reference sign 1134 corresponding to the second projection portion 134 of FIG. 7A. The members indicated by the reference sign 1133 and the reference sign 1134 are not present in practice. Additionally, these members show framework members responsible for a water wheel holding strength.

Insides of the first projection portion 133 and the second projection portion 134 communicate with the inside of the casing main body portion 132, and the insides of the casing main body portion 132, the first projection portion 133, and the second projection portion 134 are filled with a filler.

The second embodiment is provided with, as the stator STb, the first stator STb-1 arranged inside the first projection portion 133, and the second stator STb-2 arranged inside the second projection portion 134. The first stator STb-1 and the second stator STb-2 have the same configurations as those provided in the first embodiment.

In detail, the first stator STb-1 includes a first power generation coil portion 20b-1 and a first stator side yoke 11b-1 housed in the first projection portion 133,.

The second stator STb-2 includes a second power generation coil portion 20b-2 and a second stator side yoke 11b-2 housed in the second projection portion 134.

The second embodiment includes, as the rotor, a first rotor RTb-1 and a second rotor RTb-2. These first rotor RTb-1 and second rotor RTb-2 have the same configurations as those provided in the first embodiment.

In detail, the first rotor RTb-1 includes a first magnet array 5b-1 arranged to be opposed to the first power generation coil portion 20b-1 with a part of a casing wall 13b interposed therebetween, and a first magnet holding member (first rotor side yoke) 15b-1 which holds the first magnet array 5b-1.

The second rotor RTb-2 includes a second magnet array 5b-2 arranged to be opposed to the second power generation coil portion 20b-2 with a part of the casing wall 13b interposed therebetween, and a second magnet holding member (second rotor side yoke) 15b-2 which holds the second magnet array 5b-2.

The second embodiment is provided with, as the water wheel, the first water wheel 4b-1 arranged, at the side of the first projection portion 133, so as to be coupled with the first magnet holding member 15b-1 of the first rotor RTb-1, and the second water wheel 4b-2 arranged, at the side of the second projection portion 134, so as to be coupled with the second magnet holding member 15b-2 of the second rotor RTb-2.

The first water wheel 4b-1 and the second water wheel 4b-2 have the same configuration as those provided in the first embodiment. The first water wheel 4b-1 and the second water wheel 4b-2 are arranged symmetrical to each other with respect to the casing main body portion 132 such that the first water wheel 4b-1 can rotate counterclockwise in FIG. 7B with respect to a water current P, and the second water wheel 4b-2 can rotate clockwise in FIG. 7B with respect to the water current P.

In the second embodiment having such a configuration, the casing main body portion 132 is formed to have a width gradually narrowing from the center part of the casing main body portion 132 to one end side and the other end side in plan view. Therefore, the casing main body portion 132 is arranged to have the longitudinal direction of the casing main body portion 132 from one end side to the other end with respect to the water current P followed along a direction of the water current P, so that the casing 31b constantly takes a stable position with respect to the water current P.

The water current P divided at the casing main body portion 132 into both sides in the width direction thereof has a speed increased at a position of reaching the first water wheel 4b-1 and the second water wheel 4b-2 to generate a maximum torque.

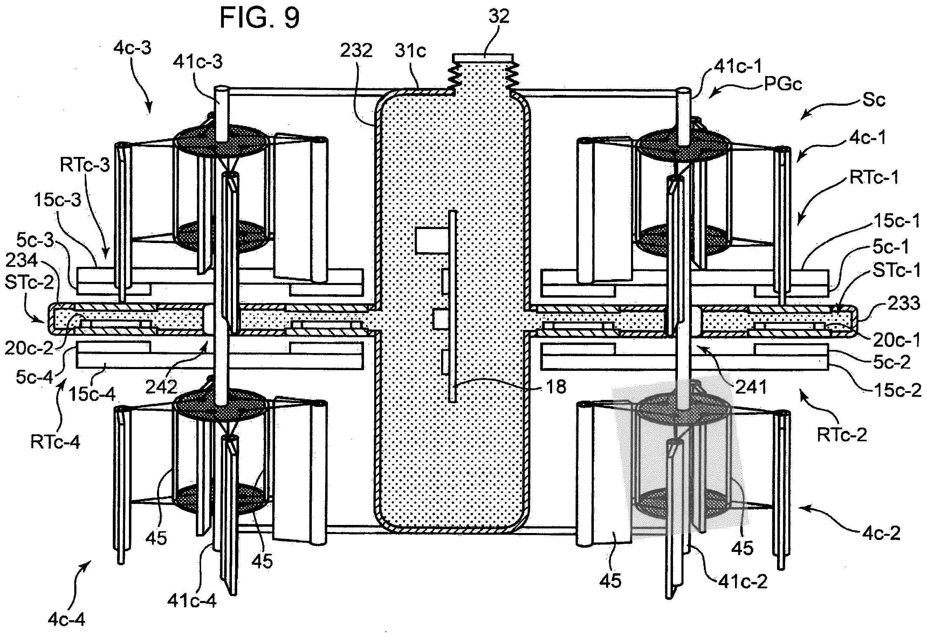

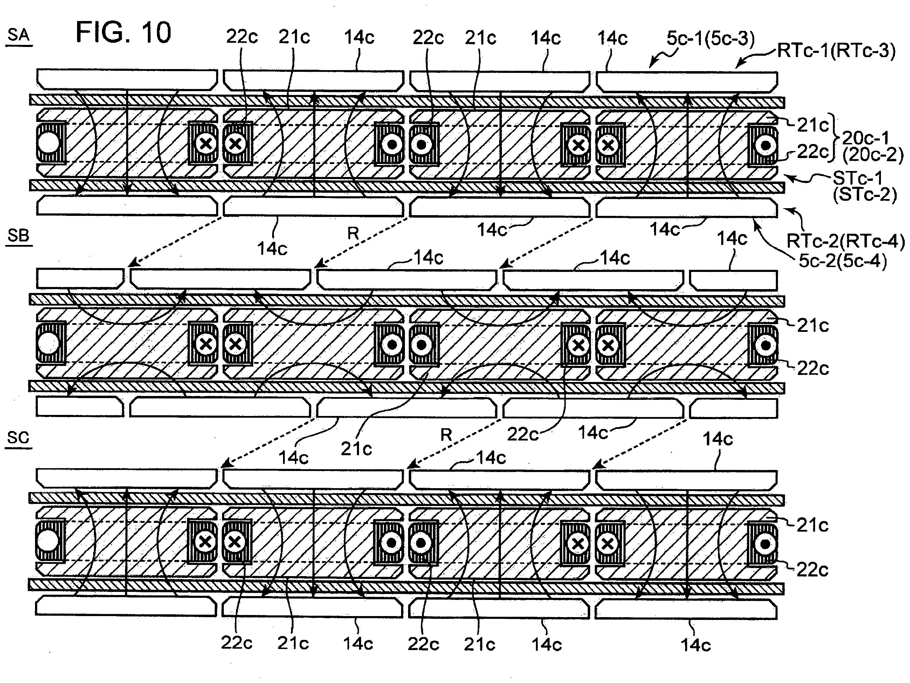

A subsea buoy Sc of a third embodiment will be described with reference to FIG. 9 to FIG. 11. The subsea buoy Sc of the third embodiment, similarly to the first embodiment, includes a float, an AG type power generator PGc, water wheels 4c-1 to 4c-4, a tail, and a sinker (in FIG. 9, illustration of the float, the tail, and the sinker is omitted). The float, the tail, and the sinker have the same configurations as those provided in the first embodiment. In FIG. 10, SA denotes a state A, SB denotes a state B, SC denotes a state C, and R denotes rotation.

The AG type power generator PGc of the third embodiment includes a casing 31c, stators STc-1 and STc-2, rotors RTc-1, RTc-2, RTc-3, and RTc-4.

The casing 31c of the third embodiment includes, similarly to the casing 31b of the second embodiment, a casing main body portion 232, projection portions (a first projection portion 233 and a second projection portion 234) projecting from the casing main body portion 232.

The casing main body portion 232 includes an information obtaining portion and a pressure adjustment mechanism 32, and houses an electrical component 18 therein. The information obtaining portion, the pressure adjustment mechanism 32, and the electrical component 18 have substantially the same configurations as those provided in the first embodiment.

The third embodiment includes, as the projection portion, the first projection portion 233 projecting to one side in a width direction of the casing main body portion 232, and the second projection portion 234 projecting to the other side in the width direction similarly to the projection portions of the second embodiment. In the third embodiment, the first projection portion 233 and the second projection portion 234 project from a center part in an up-down direction of the casing main body portion 232.

The third embodiment includes, as the stator, the first stator STc-1 arranged inside the first projection portion 233, and the second stator STc-2 arranged inside the second projection portion 234.

The first stator STc-1 includes a first power generation coil portion 20c-1 housed in the first projection portion 233. The first stator STc-1 of the third embodiment, however, fails to include a yoke corresponding to the first stator side yoke 11b-1 disposed in the second embodiment.

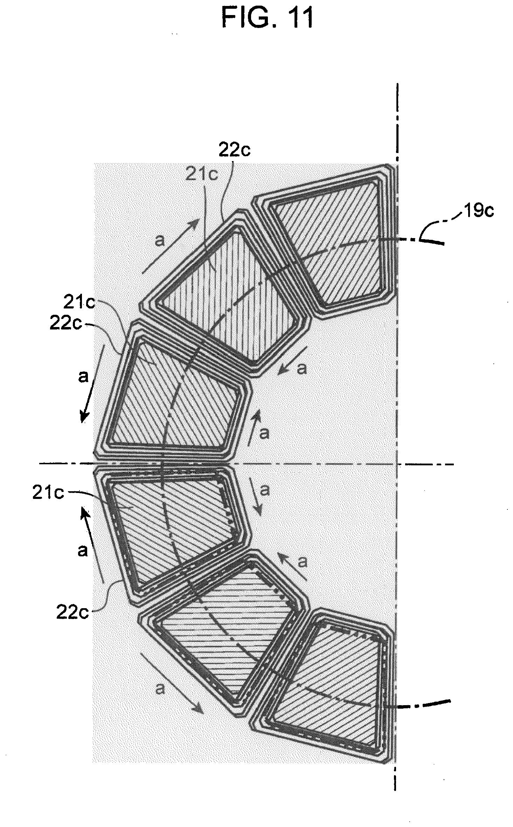

The first power generation coil portion 20c-1, similarly to the first power generation coil portion 20b-1 of the second embodiment, includes a plurality of coil iron cores 21c and coils 22c wound around the coil iron cores 21c, and the coils 22c of the third embodiment, as shown in FIG. 11, are connected in series by wires wound around two coil iron cores 21c adjacent to each other in a circumferential direction so as to have winding directions a reverse to each other.

The second stator STc-2 includes a second power generation coil portion 20c-2 housed in the second projection portion 234. The second stator STc-2 of the third embodiment, however, fails to include a yoke corresponding to the second stator side yoke 11b-2 disposed in the second embodiment.

The third embodiment includes, as the rotor, the first rotors RTc-1 and RTc-2, and the second rotors RTc-3 and RTc-4 similarly to the second embodiment.

The third embodiment includes, as the first rotor, the one first rotor RTc-1 and the other first rotor RTc-2 arranged on both sides of one side (upper side) and the other side (lower side) of the first power generation coil portion 20c-1 with the first power generation coil portion 20c-1 interposed therebetween.

The one-side first rotor RTc-1 includes a one-side first magnet array 5c-1 arranged on one side (upper side) of the first power generation coil portion 20c-1 so as to be opposed to the first power generation coil portion 20c-1, and a one-side first rotor side yoke 15c-1 (magnet holding member) which holds the one-side first magnet array 5c-1.

The other side first rotor RTc-2 includes the other side first magnet array 5c-2 arranged on the other side (lower side) of the first power generation coil portion 20c-1 so as to be opposed to the first power generation coil portion 20c-1, and the other side first rotor side yoke 15c-2 (magnet holding member) which holds the other side first magnet array 5c-2.

The third embodiment includes, as the second rotor, a one-side second rotor RTc-3 and the other side second rotor RTc-4 arranged on both sides, one side and the other side of the second power generation coil portion 20c-2, with the second power generation coil portion 20c-2 interposed therebetween.

The one-side second rotor RTc-3 includes a one-side second magnet array 5c-3 arranged on one side of the second power generation coil portion 20c-2 so as to be opposed to the second power generation coil portion 20c-2, and a one-side second rotor side yoke 15c-3 (magnet holding member) which holds the one-side second magnet array 5c-3.

The other side second rotor RTc-4 includes the other side second magnet array 5c-4 arranged on the other side of the second power generation coil portion 20c-2 so as to be opposed to the second power generation coil portion 20c-2, and the other side second rotor side yoke 15c-4 (magnet holding member) which holds the other side second magnet array 5c-4.

The third embodiment includes, as the water wheel, the one-side first water wheel 4c-1 and the other side first water wheel 4c-2 arranged on the first projection portion 233 side, and the one-side second water wheel 4c-3 and the other side second water wheel 4c-4 arranged on the second projection portion 234 side. Thus, the third embodiment includes four water wheels.

The one-side first water wheel 4c-1 includes a first rotation shaft 41c-1 fixedly coupled with the one-side first rotor side yoke 15c-1, and is arranged on one side of the first power generation coil portion 20c-1. The other side first water wheel 4c-2 includes a second rotation shaft 41c-2 fixedly coupled with the other side first rotor side yoke 15c-2, and is arranged on the other side of the first power generation coil portion 20c-1.

In the third embodiment, the first rotation shaft 41c-1 and the second rotation shaft 41c-2 are configured with one first water wheel rotation shaft 241. In detail, the first water wheel rotation shaft 241 is rotatably inserted through the first projection portion 233 from one side to the other side (from an upper side to a lower side). A one side portion of the first water wheel rotation shaft 241 provided on one side of the first projection portion 233 to project is the first rotation shaft 41c-1. The other side portion of the first water wheel rotation shaft 241 provided on the other side of the first projection portion 233 to project is the second rotation shaft 41c-2.

The one-side second water wheel 4c-3 includes a third rotation shaft 41c-3 fixedly coupled with the one-side second rotor side yoke 15c-3, and is arranged on one side of the second power generation coil portion 20c-2. The other side second water wheel 4c-4 includes a fourth rotation shaft 41c-4 fixedly coupled with the other side second rotor side yoke 15c-4, and is arranged on the other side of the second power generation coil portion 20c-2.

In the third embodiment, the third rotation shaft 41c-3 and the fourth rotation shaft 41c-4 are configured with one second water wheel rotation shaft 242. In detail, the second water wheel rotation shaft 242 is rotatably inserted through the second projection portion 234 from one side to the other side (from an upper side to a lower side). A one side portion of the second water wheel rotation shaft 242 provided on one side of the second projection portion 234 to project is the third rotation shaft 41c-3. The other side portion of the second water wheel rotation shaft 242 provided on the other side of the second projection portion 234 to project is the fourth rotation shaft 41c-4. The remaining configuration in the third embodiment has the same configuration as the second embodiment.

In thus configured subsea buoy Sc of the third embodiment, the first power generation coil portion 20c-1 as one power generation coil portion is sandwiched by a double ferromagnetic field generated by the two magnet arrays 5c-1 and 5c-2, and the second power generation coil portion 20c-2 as one power generation coil portion is sandwiched by a double ferromagnetic field generated by the two magnet arrays 5c-3 and 5c-4. The magnet arrays 5c-1 to 5c-4 are driven by the water wheels 4c-1 to 4c-4, respectively. This enables a power generation system with a high space utilization efficiency to be realized. In addition, since fixing side yokes of the power generation coil portions 20c-1 and 20c-2 can be omitted, the power generation system can be reduced in weight as a whole.

In a case, for example, where a magnet array 5c is arranged only on one side or the other side of the first power generation coil portion 20c-1 and the second power generation coil portion 20c-2, a thrust force generated by a sucking force of an iron core and the magnet of the power generation coil portion places considerable constraint on load bearing of a rotation shaft of a water wheel and a bearing mechanism. However, in the third embodiment, the magnet arrays 5c are arranged on both sides of each of the first power generation coil portion 20c-1 and the second power generation coil portion 20c-2. Therefore, a sucking force generated by magnets on one side and the other side of each of the first power generation coil portion 20c-1 and the second power generation coil portion 20c-2 via the power generation coil portion can be easily absorbed by a shaft strength of one first water wheel rotation shaft 241 and a shaft strength of one second water wheel rotation shaft 242. Accordingly, the rotation shaft of the water wheel can be made simple and reduced in weight. Additionally, in general, a high-strength material has inferior corrosion resistance and a material with superior corrosion resistance has low strength or is fragile. Both have a trade-off relation. The rotation shaft requires corrosion resistance enabling subsea operation of more than several years. Since the third embodiment allows for simple and light-weight rotation shaft, a selectable range of materials for the rotation shaft can be expanded.

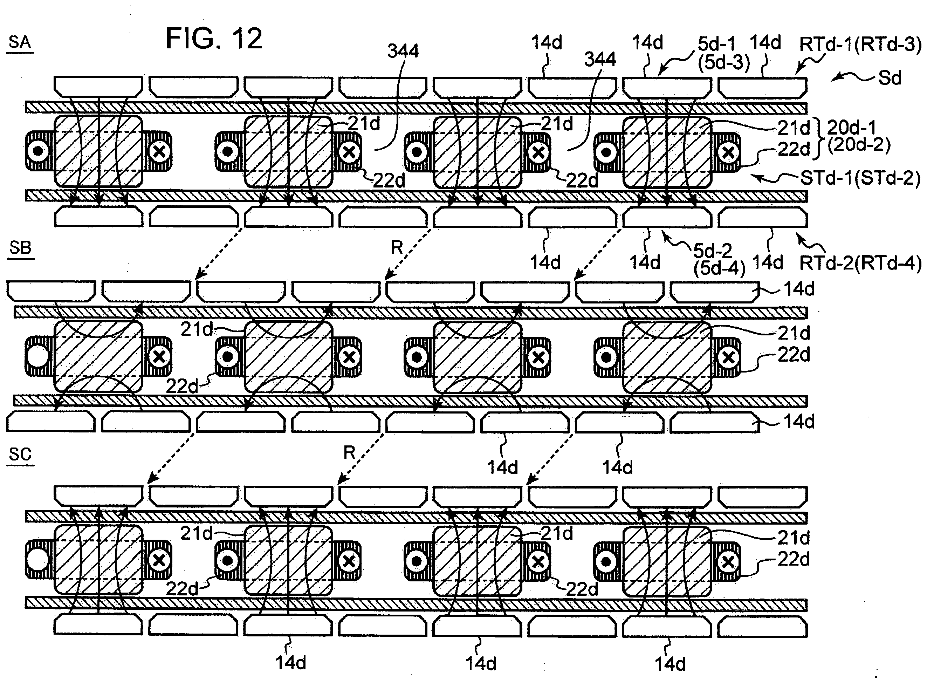

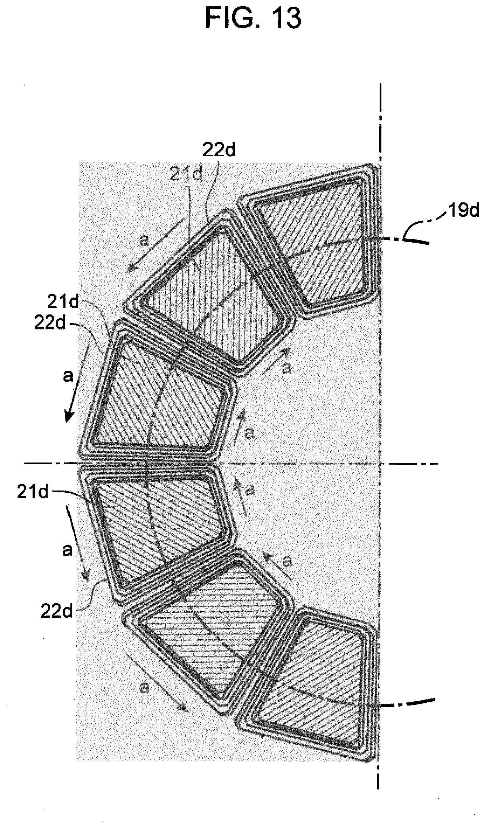

A subsea buoy Sd of a fourth embodiment will be described with reference to FIG. 12 and FIG. 13. An AG type power generator of the subsea buoy Sd of the fourth embodiment includes a casing, stators STd-1 and STd-2, and rotors RTd-1 to RTd-4. The casing has the same configuration as the casing of the third embodiment. In FIG. 12, SA denotes a state A, SB denotes a state B, SC denotes a state C, and R denotes rotation.

The fourth embodiment includes, as the rotor, the one-side first rotor RTd-1, the other side first rotor RTd-2, the one-side second rotor RTd-3, and the other side second rotor RTd-4 similarly to the rotor of the third embodiment.

The one-side first rotor RTd-1 of the fourth embodiment includes a one-side first magnet array 5d-1 formed with magnets 14d in number (4n: n is an integer not less than 3) double the number of coil iron cores 21d of the one-side first stator STd-1, and a one-side first rotor side yoke which holds the one-side first magnet array 5d-1.

In the one-side first magnet array 5d-1, the plurality of magnets 14d are arranged on a circumference of a predetermined second pitch circle 19d at equal intervals in a circumferential direction such that two magnets 14d adjacent to each other in the circumferential direction have directions of polarization opposite to each other. Although in the fourth embodiment, the second pitch circle 19d is a circle having the same radius as that of the first pitch circle 19a in the first embodiment, the circle may have a different radius.

The other side first magnet array 5d-2 is arranged up-down symmetrically to the one-side first magnet array 5d-1 with respect to the first stator STd-1. In detail, in the other side first magnet array 5d-2, the plurality of magnets 14d are arranged on the circumference of the second pitch circle 19d such that two magnets 14d adjacent to each other in the circumferential direction have directions of polarization opposite to each other similarly to the one-side first magnet array 5d-1.

A one-side second magnet array 5d-3 is similarly arranged to the one-side first magnet array 5d-1. The other side second magnet array 5d-4 is arranged up-down symmetrically to the one-side second magnet array 5d-3 with respect to the second stator STd-2.

The fourth embodiment includes, as the stator, the first stator STd-1 having a first power generation coil portion 20d-1, and the second stator STd-2 having a second power generation coil portion 20d-2 similarly to the stator of the third embodiment.

The first power generation coil portion 20d-1 of the fourth embodiment includes the coil iron cores 21d in number (2n) of half the number of the magnets 14d of the one-side first rotor RTd-1, and coils 22d wound around the coil iron cores 21d.

The coil iron cores 21d are arranged on the circumference of the second pitch circle 19d at equal intervals in the circumferential direction. Accordingly, in the first power generation coil portion 20d-1 of the fourth embodiment, gaps 344 are formed between the coil iron cores 21d adjacent to each other in circumferential direction, the gaps having substantially the same width as the magnets 14d of a one-side first magnet array 5d-1 in the circumferential direction, and the magnets 14d are arranged to be at a position corresponding to every other coil iron core 21d in the circumferential direction. Although in FIG. 13, the gaps 344 are barely illustrated for convenience' sake, the gaps 344 are in practice formed between the coil iron cores 21d adjacent to each other in the circumferential direction.

The coils 22d are wound around the coil iron cores 21d such that the winding directions a of adjacent two coil iron cores in the circumferential direction are the same as shown in FIG. 13.

The second power generation coil portion 20d-2 has the same configuration as the first power generation coil portion 20d-1. The remaining configuration in the fourth embodiment has the same configuration as the third embodiment.

In thus configured subsea buoy Sd of the fourth embodiment, the number of the magnets 14d is double the number of the coil iron cores 21d. This doubles a frequency of an alternating current magnetic field generated by rotation of the magnets 14d as compared with such an axial gap type power generator structure as shown in the third embodiment in which the number of the coil iron cores 21c and the number of the magnets 14c are the same. An electromotive force of one coil portion in which the coil 22d is wound around one coil iron core 21d can be obtained by time derivative of a crossing magnetic flux. Accordingly, a generated voltage in the fourth embodiment is double a generated voltage in the third embodiment. Further, according to the fourth embodiment, when a positional relation between the stators (the stators STd-1, STd-2) and the rotors (the rotors RTd-1 to RTd-4) is in the state A and the state C as shown in FIG. 12, a crossing magnetic flux of the same direction is generated. In the first power generation coil portion 20d-1, the coils 22d are wound around in the same direction and the coils 22d are daisy-chain-connected in series. These enable addition of electromotive forces generated in the coils 22d. This is also the case with the second power generation coil portion 20d -2.

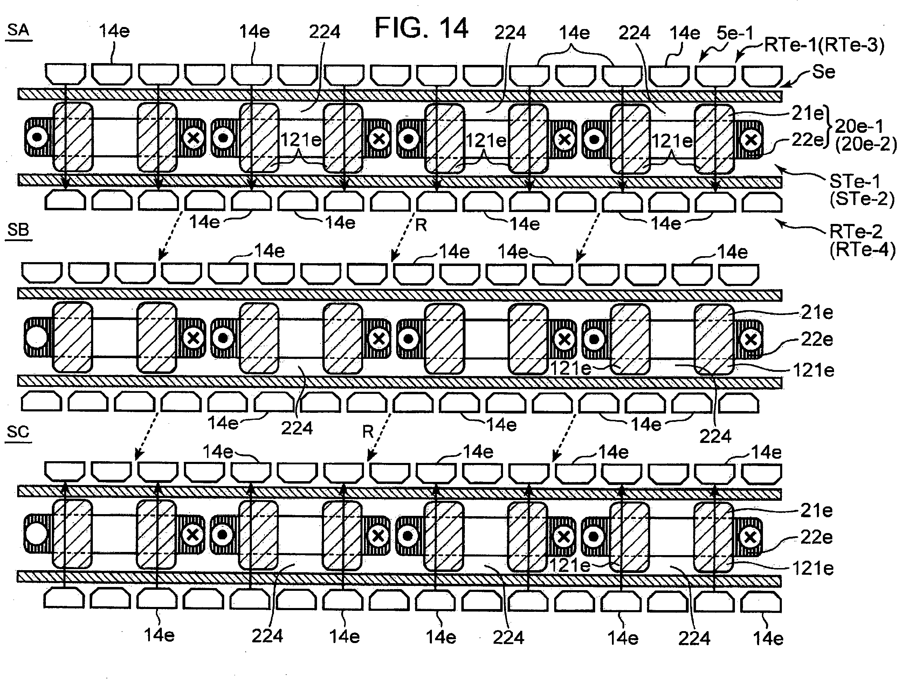

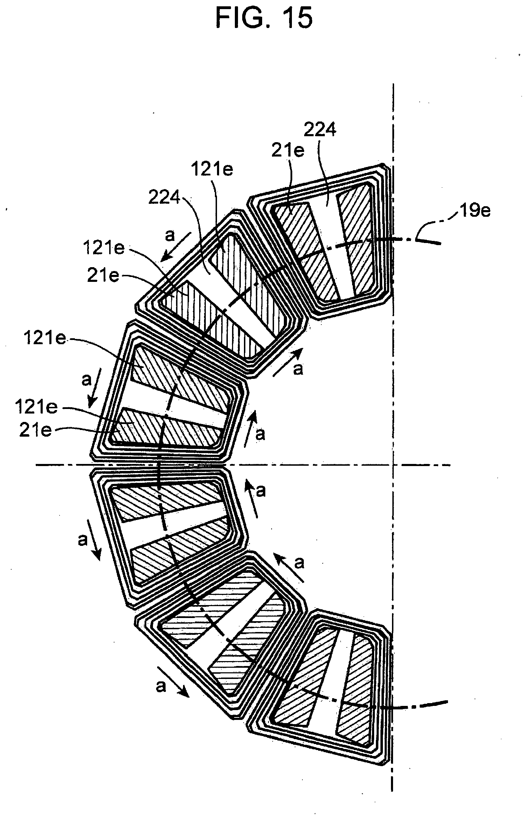

A subsea buoy Se of a fifth embodiment will be described with reference to FIG. 14 and FIG. 15. An AG type power generator of the subsea buoy Se of the fifth embodiment includes a casing, stators STe-1 and STe-2, and rotors RTe-1 to RTe-4. The casing has the same configuration as that of the casing of the third embodiment. In FIG. 14, SA denotes a state A, SB denotes a state B, SC denotes a state C, and R denotes rotation.

The fifth embodiment includes, as the rotor, the one-side first rotor RTe-1, the other side first rotor RTe-2, the one-side second rotor RTe-3, and the other side second rotor RTe-4 similarly to the rotor of the third embodiment.

The one-side first rotor RTe-1 of the fifth embodiment includes a one-side first magnet array 5e-1 formed with 2n (n is an integer not less than 3) of magnets 14e, and a one-side first rotor side yoke which holds the one-side first magnet array 5e-1.

In the one-side first magnet array 5e-1, the magnets 14e are arranged on a circumference of a predetermined third pitch circle 19e (illustrated in FIG. 15) at equal intervals in a circumferential direction such that two magnets 14e adjacent to each other in the circumferential direction have directions of polarization opposite to each other. Although in the fifth embodiment, the third pitch circle 19e is a circle having the same radius as that of the first pitch circle 19a in the first embodiment, the circle may have a different radius.

The fifth embodiment includes, as the stator, the first stator STe-1 having a first power generation coil portion 20e-1, and the second stator STe-2 having a second power generation coil portion 20e-2 similarly to the stator of the third embodiment.

The first power generation coil portion 20e-1 of the fifth embodiment includes coil iron cores 21e, and coils 22e wound around the coil iron cores 21e.

The coil iron cores 21e are arranged on the circumference of the third pitch circle 19e at equal intervals in the circumferential direction. Additionally, each coil iron core 21e includes a gap portion 224 at the center of the coil iron core 21e in a circumferential direction, the gap portion 224 passing through the coil iron core 21e in a thickness direction. The thickness direction is a direction from the one-side first magnet array 5e-1 side to the other side first magnet array 5e-2 side. The gap portion 224 has a width substantially the same as a width of the magnet 14e of the one-side first magnet array 5e-1 in a circumferential direction. Accordingly, in the fifth embodiment, one coil iron core 21e is formed to have sub-coil iron cores 121e at both sides of the gap portion 224 in a circumferential direction, with the gap portion 224 interposed therebetween. Then, in the fifth embodiment, so as to correspond to every other magnet of a number 2n of the magnets 14e, a number n (n is an even number) of sub-coil iron cores 121e of the same shape are arranged at substantially equal intervals on the circumference of the third pitch circle 19e. Additionally, of the n sub-coil iron cores 121e, a number m (m is a submultiple of n and n = 2 × m) of the sub-coil iron cores 121e successive in the circumferential direction are set as one coil iron core set. In this set, the respective coils 22e form wires wound around the coil iron cores 21e adjacent to each other in the circumferential direction so as to have the same winding direction a.

The second power generation coil portion 20e-2 has the same configuration as the first power generation coil portion 20e-1. The remaining configuration in the fifth embodiment has the same configuration as the third embodiment.

In thus configured subsea buoy Se of the fifth embodiment, the number of the magnets 14e is a multiple of m of the number of the sub-coil iron cores 121e. This multiplies a frequency of an alternating current magnetic field generated by rotation of the magnets 14e m times as compared with such an axial gap type power generator structure as shown in the third embodiment in which the number of the coil iron cores 21c and the number of the magnets 14c are the same. An electromotive force of one coil portion in which the coil 22e is wound around the coil iron core 21e can be obtained by time derivative of a crossing magnetic flux. Accordingly, a generated voltage in the fifth embodiment is multiplied m times a generated voltage in the third embodiment. Further, according to the fifth embodiment, when a positional relation between the stators (the stators STe-1 and STe-2) and the rotors (the rotors RTe-1 to RTe-4) is in the state A and the state C as shown in FIG. 14, a crossing magnetic flux of the same direction is generated. In the first power generation coil portion 20e-1, the coils 22e are wound around in the same direction and the coils 22e are daisy-chain-connected in series. These enable addition of electromotive forces generated in the coils 22e. This is also the case with the second power generation coil portion 20e-2.

The larger m becomes, the higher an obtained voltage becomes. However, a cross section area of the power generation coil portion becomes smaller to reduce a space factor of the coils. As a result, a coil resistance, that is, Joule loss is increased to prevent smooth flow of an electric current, resulting in preventing an increase of obtained electric power. Such trade-off occurs.

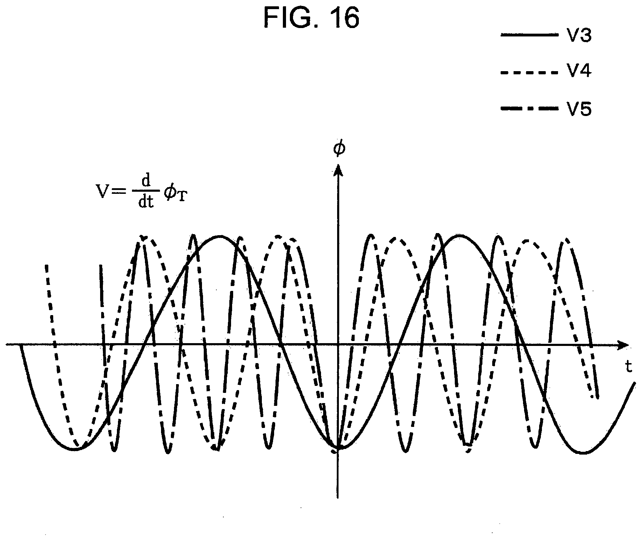

Behavior of electromotive forces generated in the power generation coil portions of the third embodiment, the fourth embodiment, and the fifth embodiment is shown in FIG. 16. V represents a combined electromotive force. V3 represents an electromotive force generated in the power generation coil portion of the third embodiment. V4 represents an electromotive force generated in the power generation coil portion of the fourth embodiment. V5 represents an electromotive force generated in the power generation coil portion of the fifth embodiment. With respect to a power generation coil portion 20c of the third embodiment, a power generation coil portion 20d of the fourth embodiment has a double frequency and a power generation coil portion 20e of the fifth embodiment has a quadruple frequency. Since an electromotive force of one coil portion can be obtained by time derivative of a crossing magnetic flux, a generated voltage is increased to double and quadruple. As much as the increase, however, utilization efficiency (a ratio of contribution to a coil electromotive force) of a magnet magnetic field (magnetic flux line) is reduced to also reduce a space factor. Accordingly, it is only necessary to adopt a power generation coil portion having a suitable mode according to a necessary voltage of electrical equipment.

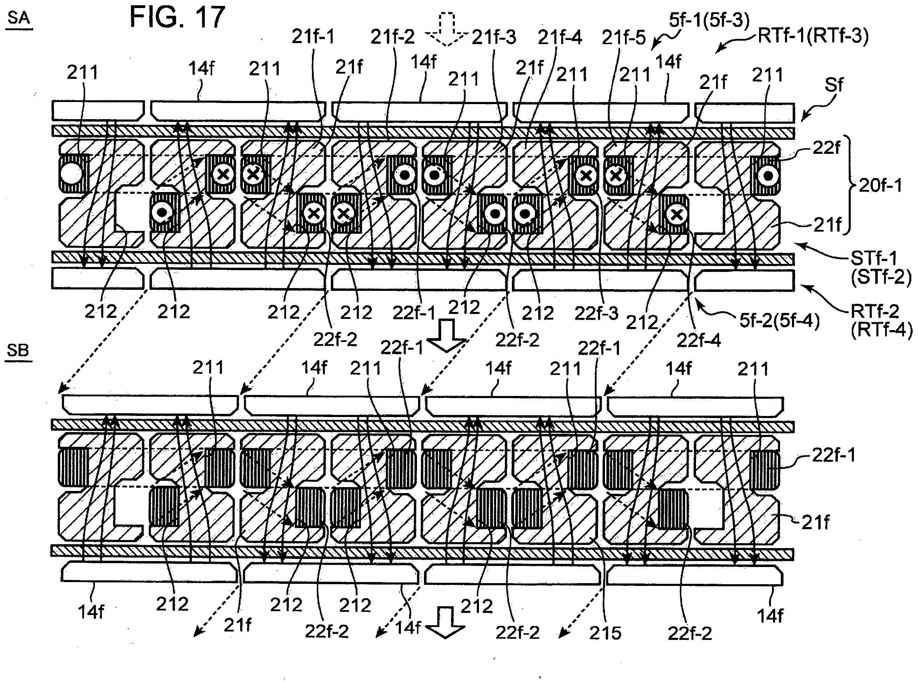

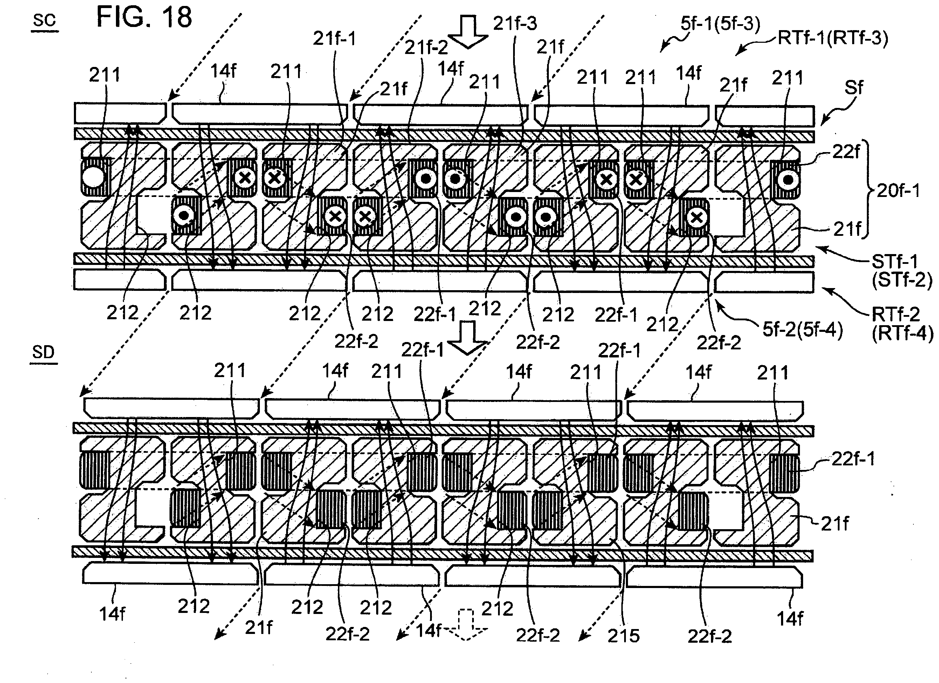

A subsea buoy Sf of a sixth embodiment will be described with reference to FIG. 17 and FIG. 18. An AG type power generator of the subsea buoy Sf of the sixth embodiment includes a casing, stators STf-1 and STf-2, and rotors RTf-1 to Rtf-4. The casing has the same configuration as that of the casing of the third embodiment. In FIG. 17 and FIG. 18, SA denotes a state A, SB denotes a state B, SC denotes a state C, and SD denotes a state D.

The sixth embodiment includes, as the rotor, the one-side first rotor RTf-1, the other side first rotor RTf-2, the one-side second rotor RTf-3, and the other side second rotor RTf-4 similarly to the rotor of the third embodiment.

The one-side first rotor RTf-1 of the sixth embodiment includes a one-side first magnet array 5f-1 formed with a plurality of magnets 14f, and a one-side first rotor side yoke which holds the one-side first magnet array 5f-1.

In the one-side first magnet array 5f-1, the plurality of magnets 14f are arranged on a circumference of a predetermined fourth pitch circle 19f at equal intervals in a circumferential direction such that two magnets 14f adjacent to each other in the circumferential direction have directions of polarization opposite to each other. Although in the sixth embodiment, the fourth pitch circle 19f is a circle having the same radius as that of the first pitch circle 19a in the first embodiment, the circle may have a different radius.

The other side first rotor RTf-2, the one-side second rotor RTf-3, and the other side second rotor RTf-4 have substantially the same configuration as the one-side first rotor RTf-1.

The sixth embodiment includes, as the stator, the first stator STf-1 having a first power generation coil portion 20f-1, and the second stator STf-2 having a second power generation coil portion 20f-2 similarly to the stator of the third embodiment.

The first power generation coil portion 20f-1 of the sixth embodiment includes coil iron cores 21f twice the number of the magnets 14f of the one-side first rotor RTf-1, and coils 22f wound around the coil iron cores 21f.

A width of each coil iron core 21f in a circumferential direction is substantially half a width of the magnet 14f of the one-side first rotor RTf-1 in a circumferential direction. Each coil iron core 21f includes a first coil winding portion 211 on one side in a thickness direction, and a second coil winding portion 212 on the other side in the thickness direction.

The sixth embodiment includes two kinds of the coil iron cores 21f (the coil iron cores 21f having a Z(S)-shaped cross section and the coil iron cores 21f having a reverse Z(S)-shaped cross section). The Z-shaped coil iron cores 21f and the reverse Z-shaped coil iron cores 21f are arranged alternately in the circumferential direction. This minimizes a useless space and increases a ratio of a space occupied by coils to suppress a copper loss. The coil iron cores 21f are not limited to these two kinds and can be changed appropriately.

The sixth embodiment includes, as a coil, a plurality of first coils 22f-1 and a plurality of third coils 22f-3 wound around the first coil winding portion 211, and a plurality of second coils 22f-2 and a plurality of fourth coils 22f-4 wound around the second coil winding portion 212 as shown in FIG. 17.

The first coils 22f-1 are coils wound around the respective first coil winding portions 211 of, among arbitrary five first coil iron core 21f-1 to fifth coil iron core 21f-5 sequentially arranged in a circumferential direction, the first coil iron core 21f-1 and the second coil iron core 21f-2 adjacent to the first coil iron core 21f-1. The second coils 22f-2 are coils wound around the respective second coil winding portions 212 of the second coil iron core 21f-2 and the third coil iron core 21f-3 adjacent to the second coil iron core 21f-2 so as to deviate from the first coils 22f-1 by a half pitch (half phase). The third coils 22f-3 are coils wound around the respective first coil winding portions 211 of the third coil iron core 21f-3 and the fourth coil iron core 21f-4 adjacent to the third coil iron core 21f-3 so as to deviate from the second coils 22f-2 by a half pitch (half phase) and so as to be arranged adjacent to the first coils 22f-1 in the circumferential direction. The fourth coils 22f-4 are coils wound around the respective second coil winding portions 212 of the fourth coil iron core 21f-4 and the fifth coil iron core 21f-5 adjacent to the fourth coil iron core 21f-4 so as to deviate from the third coils 22f-3 by a half pitch (half phase) and so as to be arranged adjacent to the second coils 22f-2 in the circumferential direction.

The first coils 22f-1 and the second coils 22f-2 have the same winding direction a. The winding direction a of each of the first coils 22f-1 and the second coils 22f-2 is reverse to the winding direction a of each of the third coils 22f-3 and the fourth coils 22f-4.

The first coils 22f-1 and the third coils 22f-3 are wired in series in its entirety to form a first line. The second coils 22f-2 and the fourth coils 22f-4 are wired in series in its entirety to form a second line. The first line and the second line are wired in series. The remaining configuration of the sixth embodiment has the same configuration as the third embodiment.

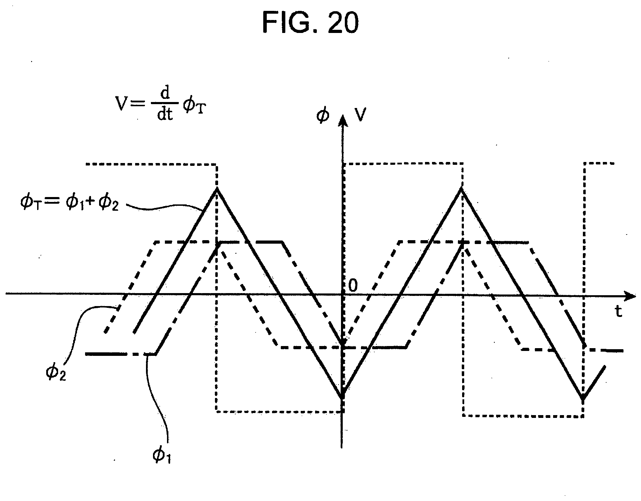

In thus configured subsea buoy Sf of the sixth embodiment, the first line (e.g. a line including coil rows of the first coils 22f-1 and the third coils 22f-3 daisy-chain-connected) and the second line (e.g. a line including coil rows of the second coils 22f-2 and the fourth coils 22f-4 daisy-chain-connected) generate trapezoidal crossing magnetic fluxes which are deviated by a half phase as shown in FIG. 20. Addition of these fluxes composes a crossing magnetic flux with a triangular waveform. Time derivative of the flux obtains a rectangular wave-shaped electromotive force and rectifying the electromotive force obtains a direct current voltage (electric current). V represents a combined electromotive force. φ1 represents a magnetic flux penetrating through the first coil and the third coil. φ2 represents a magnetic flux penetrating through the second coil and the fourth coil. φ_{T} represents a series penetrating magnetic flux in an up-and-down direction. It can be said that a voltage generated by the power generation coil portion of the sixth embodiment has an effective electric power (duty) close to 100% as compared with a sine wave voltage generated by the power generation coil portions of the third embodiment to the fifth embodiment. The sixth embodiment includes a power generation structure suitable for a case where more importance is placed on total electric power than on voltage.

It is assumed that a power generation capacity is represented as P(W), an area of the blade member of the water wheel is represented as A(m²) (≅provisionally 2m²), a water density is represented as p, and a flow speed is represented as V. A conversion efficiency Cp is assumed to be 0.2. An average electric power available for an electrical component is P ≤ (Cp × ρ × A × V³)/2. It can be therefore predicted that 3 W electric power is obtained on the seabed and 25 W electric power is obtained at a water depth of 100 m.

### (Summary of Embodiments)

The inventors of the present invention have given various considerations to find, as a result, that the above object can be achieved by the present embodiments set forth in the following. Specifically, with reference to FIG. 2 , a subsea buoy according to one aspect of the present embodiment includes: a power generation coil portion formed of a plurality of coil iron cores with coils wound around the coil iron cores; a casing which houses the power generation coil portion; a magnet array formed with a plurality of magnets arranged at a side opposite to the power generation coil portion with a part of a casing wall configuring the casing interposed therebetween so as to be magnetically coupled with the power generation coil portion; a magnet holding member which holds the magnet array; and a water wheel having a rotation shaft formed to be rotatable by a water current, in which a part of the casing wall is formed of a nonmagnetic and insulative material, or a material having a high electric resistance, and the magnet holding member is fixedly coupled to the rotation shaft. Here, a "material with a high electric resistance" denotes a material having an electric resistance of 1 kilohm meter (1kΩ·m) or more.

This configuration enables supply of electric power by independent power generation by, for example, rotating the rotation shaft of the water wheel by a tidal current present surrounding a worksite, which rotation is followed by rotation of the magnet holding member that holds the magnet array together with the rotation shaft. This enables substantially permanent measurement and monitoring of the subsea buoy without maintenance.

By an alternating current magnetic field generated by the water wheel placed outside of the casing in a completely airtight state, electric power can be generated inside the casing in a non-contact manner. This enables size reduction of the subsea buoy. Additionally, since the inside of the casing has no mechanism that operates mechanically, deterioration and failures inside the casing are minimized.

Since the casing wall through which an alternating current magnetic field passes is formed of a nonmagnetic and insulative material or a material with a high electric resistance, an electric power loss due to hysteresis or eddy current hardly occurs.

According to another aspect, with reference to FIG. 2, in the above-described subsea buoy, the casing includes a filling chamber zoned to be formed in the casing wall, a filler made of non-compressive and insulative liquid filled in the filling chamber, and a pressure adjustment mechanism which adjusts a pressure in the filling chamber.

According to this configuration, the filling chamber formed in the casing is filled with the filler made of non-compressive fluid, and the casing includes a pressure adjustment mechanism which adjusts a pressure in the filling chamber. Therefore, when the subsea buoy is sunk 40 m or more down into the sea (e.g. deep sea having a water depth of 1 km or more), inside and outside pressures of the casing are always maintained to be constant. This eliminates the need of the casing wall to be a pressure resistant container made of thick high-strength metal. As long as having corrosion resistance to environment sea water, the casing wall should not necessarily be made of metal. Since a relatively thin member is sufficient for use as the casing wall, the subsea buoy can be made light and inexpensive as a whole.

Since in the subsea buoy of the present embodiment, the inside and outside pressures of the casing are always maintained to be constant, the casing wall between the magnet array outside the casing and the power generation coil portion inside thereof can be made thin. This enables the magnet array outside the casing and the power generation coil portion inside thereof to come close to each other, so that a distance therebetween is reduced. Thus, magnetic coupling between the magnet array and the power generation coil portion is strengthened to increase power generation efficiency.

Additionally, according to other aspect, with reference to FIG. 2 and FIG. 6, the above-described subsea buoy further includes a stator side yoke having an annular shape which is arranged on a side opposite to a part of the casing wall with the power generation coil portion in the casing interposed therebetween, in which the stator side yoke is formed of a wound iron core which is wrapped with a strip-shaped magnetic material, or a disk-shaped iron core having a plurality of slits formed along at least one direction of a circumferential direction and a radial direction, and the magnet holding member is a magnetic material.

According to this configuration, an alternating current magnetic flux line passing through the stator side yoke suppresses a loss caused by eddy current. For example, by combining magnetic flux lines of magnets adjacent to each other whose polarization is opposite to each other in the magnet array, a magnetic field can be enhanced while preventing a leakage of a magnetic flux line to the outside (into the sea). This makes it hard for a phenomenon to occur in which iron powder in the sea aggregates to be attached to a subsea buoy.

Additionally, according to a further aspect, with reference to FIG. 2, FIG. 3A, and FIG. 3B, in the above-described subsea buoy, the water wheel includes a plurality of holding shafts arranged at an outer side in a radial direction of the rotation shaft so as to be spaced apart in parallel to the rotation shaft, a plurality of blade members having a flat plate-shape held to the holding shafts so as to be rotatable around the holding shafts, and abutting portions which abut the respective blade members, in which each abutting portion is arranged at a position between the rotation shaft and each holding shaft so as to abut in the rotation of the blade member by the water current.

With a water current having a low flow speed, a resistance difference of a water wheel becomes a rotation driving force, the difference being between a direction in which the water wheel rotates toward a water current under a condition of water wheel circumferential speed ≤ flow speed, and a direction reverse thereto. For example, in a Savonius water wheel having a curved fixed-type blade member to be described later, a concave and convex shape of a blade member facing a water current produces a resistance difference against the water current. However, resistance not negligible remains also on a convex portion side of the blade member to generate a reverse rotation torque. Therefore, the rotation torque generated by a concave portion side of the blade member is considerably cancelled.

In the above configuration, the blade members are flat plate-shaped, and the blade members rotate by a water current and during rotation, any of the blade members is abutted by the abutting portion to be vertical to a direction of the water current, thereby generating a rotation driving force. On the other hand, the other blade members change positions to be parallel to the direction of the water current and have a low resistance to the water current. This leads to minimizing a resistance to a rotation driving force of the water wheel to generate a maximum torque.

Additionally, according to a still further aspect, with reference to FIG. 7A and FIG. 7B, in the above-described subsea buoy, the casing includes a casing main body portion, and a projection portion projecting from the casing main body portion, in which the casing main body portion is formed to have a width gradually narrowing from a substantially central part of the casing main body portion to one end side and the other end side in a longitudinal direction in parallel to the water current in plan view; the projection portion includes a first projection portion integrally projecting from the substantially central part of the casing main body portion to one side in a width direction orthogonal to the longitudinal direction in plan view, and a second projection portion projecting to the other side in the width direction; the power generation coil portion includes a first power generation coil portion housed in the first projection portion, and a second power generation coil portion housed in the second projection portion; the magnet array includes a first magnet array magnetically coupled to the first power generation coil portion, and a second magnet array magnetically coupled to the second power generation coil portion; the magnet holding member includes a first magnet holding member which holds the first magnet array, and a second magnet holding member which holds the second magnet array; and the water wheel includes a first water wheel coupled to the first magnet holding member, and a second water wheel coupled to the second magnet holding member, the first water wheel and the second water wheel being formed to rotate in directions opposite to each other when receiving a water current of the same flow direction.

According to this configuration, the casing main body portion is formed to have a width gradually narrowing from the center part of the casing main body portion to one end side and the other end side in parallel to the water current in plan view. Therefore, the casing main body portion is arranged to have a longitudinal direction of the casing main body portion from one end to the other end with respect to the water current followed along a direction of the water current, so that the casing constantly takes a stable position with respect to the water current.

Additionally, a water current divided at the casing main body portion into both sides in the width direction thereof has a speed increased at a position of reaching the two water wheels to generate a maximum torque.

Additionally, according to a still further aspect, with reference to FIG. 9, in the above-described subsea buoy, the first magnet array includes a one-side first magnet array and the other side first magnet array arranged on both sides of the first power generation coil portion with the first power generation coil portion interposed therebetween; the second magnet array includes a one-side second magnet array and the other side second magnet array arranged on both sides of the second power generation coil portion with the second power generation coil portion interposed therebetween; the first magnet holding member includes a one-side first magnet array holding member which holds the one-side first magnet array, and the other side first magnet array holding member which holds the other side first magnet array; the second magnet holding member includes a one-side second magnet array holding member which holds the one-side second magnet array, and the other side second magnet array holding member which holds the other side second magnet array; the first water wheel includes a one-side first water wheel having a first rotation shaft coupled to the one-side first magnet array, and the other side first water wheel having a second rotation shaft coupled to the other side first magnet array; the second water wheel includes a one-side second water wheel having a third rotation shaft coupled to the one-side second magnet array, and the other side second water wheel having a fourth rotation shaft coupled to the other side second magnet array; the first rotation shaft and the second rotation shaft are formed with one first magnet array rotation shaft so as to be rotatably inserted through the first projection portion; and the third rotation shaft and the fourth rotation shaft are formed with one second magnet array rotation shaft so as to be rotatably inserted through the second projection portion.

According to this configuration, one power generation coil portion is sandwiched by a double ferromagnetic field generated by the two magnet arrays, which are driven by the water wheels, respectively. This enables a power generation system with a high space utilization efficiency to be realized. In addition, since a back yoke (fixing side yokes) of the power generation coil portion can be omitted, the power generation system can be reduced in weight as a whole.

In a case, for example, where the magnet array is arranged only on one side or the other side of the first power generation coil portion, a thrust force generated by a sucking force of an iron core and a magnet of the power generation coil portion places considerable constraint on load bearing of a rotation shaft of a water wheel and a bearing mechanism. However, in this embodiment, the magnet arrays are arranged on both sides of the first power generation coil portion. Therefore, a sucking force generated by magnets on one side and the other side of the first power generation coil portion via the power generation coil portion can be easily absorbed by a shaft strength of one magnetic array rotation shaft. Accordingly, the rotation shaft of the water wheel can be made simple and reduced in weight. Additionally, in general, a high-strength material has inferior corrosion resistance and a material with superior corrosion resistance has low strength or is fragile. Both have a trade-off relation. The rotation shaft requires corrosion resistance enabling subsea operation of more than several years. Since the present embodiment allows for simple and light-weight rotation shaft, a selectable range of materials for the rotation shaft can be expanded.

Additionally, according to a still further aspect, with reference to FIG. 10 and FIG. 11, in the above-described subsea buoy, the one-side first magnet array, the other side first magnet array, the one-side second magnet array, and the other side second magnet array are each formed with 2n (n is an integer not less than 3) of magnets arranged on a circumference of a predetermined first pitch circle at substantially equal intervals such that two magnets adjacent to each other in the circumferential direction have directions of polarization opposite to each other, the first power generation coil portion and the second power generation coil portion each have the number 2n of the coil iron cores arranged at substantially equal intervals on the circumference of the first pitch circle, each coil iron core is configured with a magnetic material core, and the coil forms a wire wound around each coil iron core such that winding directions become reverse to each other at two coil iron cores adjacent to each other in the circumferential direction.

According to this configuration, since alternating current magnetic flux lines crossing with (penetrating into) adjacent coil iron cores have directions reverse to each other, series connection of reversely wound coils is daisy-chain-connection. As a result, electromotive forces generated by individual coils can be added to obtain a maximum voltage. This configuration is effective when a tidal current has a low speed. This is because when the tidal current has a low speed, the water wheel has a low rotation speed, so that less electric power can be generated.

The coil is preferably formed with a flatwise wound tape-shaped (thin strip) conductor. This increases a space factor of the coil and enables an eddy current loss in the conductor to be suppressed (i.e., Joule loss can be minimized).

Additionally, according to a still further aspect, with reference to FIG. 12 and FIG 13, in the above-described subsea buoy, the first power generation coil portion and the second power generation coil portion each have the number 2n (n is an integer not less than 3) of the coil iron cores of the same shape arranged at substantially equal intervals on a circumference of a predetermined second pitch circle, the coil forms a wire wound around each coil iron core such that winding directions become the same at two coil iron cores adjacent to each other in the circumferential direction, the one-side first magnet array, the other side first magnet array, the one-side second magnet array, and the other side second magnet array are each formed with 4n of magnets arranged on the circumference of the second pitch circle at substantially equal intervals such that two magnets adjacent to each other in the circumferential direction have directions of polarization opposite to each other, and the magnets are arranged to be at positions corresponding to every other coil iron core in the circumferential direction.

According to this configuration, by doubling the number of the magnets with respect to the number of the coil iron cores with the coils wound around the coil iron cores, a frequency of an alternating current magnetic field generated by rotation of the magnet array holding member is doubled. Since an electromotive force of one coil iron core with the coils wound around the coil iron core can be obtained by time derivative of a crossing magnetic flux, a generated voltage will be double a generated voltage in an axial gap type power generator structure in which the number of the coil iron cores and the number of the magnets are the same. Further, with reference to the state A and the state C as shown in FIG. 12, according to this configuration, when a positional relation between the stators (the stators STd-1, STd-2) and the rotors (the rotors RTd-1 to RTd-4) is in the state A and the state C as shown in FIG. 12, a crossing magnetic flux of the same direction is generated. In the first power generation coil portion, the coils are wound around in the same direction and the coils are daisy-chain-connected in series. These enable addition of electromotive forces generated in the coils. This is also the case with the second power generation coil portion.

Additionally, according to a still further aspect, with reference to FIG. 14 and FIG. 15, in the above-described subsea buoy, the one-side first magnet array, the other side first magnet array, the one-side second magnet array, and the other side second magnet array are each formed with 2n of magnets of the same shape arranged on a circumference of a predetermined third pitch circle at substantially equal intervals such that two magnets adjacent to each other in the circumferential direction have directions of polarization opposite to each other, and in the first power generation coil portion and the second power generation coil portion, the respective coil iron cores have a number n (n is an even number) of sub-coil iron cores of the same shape arranged at substantially equal intervals on the circumference of the third pitch circle so as to correspond to every other magnet of the number 2n of magnets, and of the n sub-coil iron cores, with a number m (m is a submultiple of n and n = 2 × m) of the sub-coil iron cores successive in the circumferential direction set to be one coil iron core set, the respective coils form wires wound around the coil iron cores adjacent to each other in the circumferential direction so as to have the same winding direction.

According to this configuration, by multiplying the number of the magnets by m with respect to the number of the coil iron cores with the coils wound around the coil iron cores, a frequency of an alternating current magnetic field generated by rotation of the magnet holding member is multiplied by m. Since an electromotive force of one coil iron core with the coils wound around the coil iron core can be obtained by time derivative of a crossing magnetic flux, a generated voltage is m times a generated voltage in an axial gap type power generator structure in which the number of the coil iron cores and the number of the magnets are the same. Further, with reference to the state A and the state C as shown in FIG. 14, according to this configuration, when a positional relation between the stators (the stators STe-1 and STe-2) and the rotors (the rotors RTe-1 to RTe-4) is in the state A and the state C as shown in FIG 14, a crossing magnetic flux of the same direction is generated. In the first power generation coil portion, the coils are wound around in the same direction and the coils are daisy-chain-connected in series. These enable addition of electromotive forces generated in the coils. This is also the case with the second power generation coil portion.

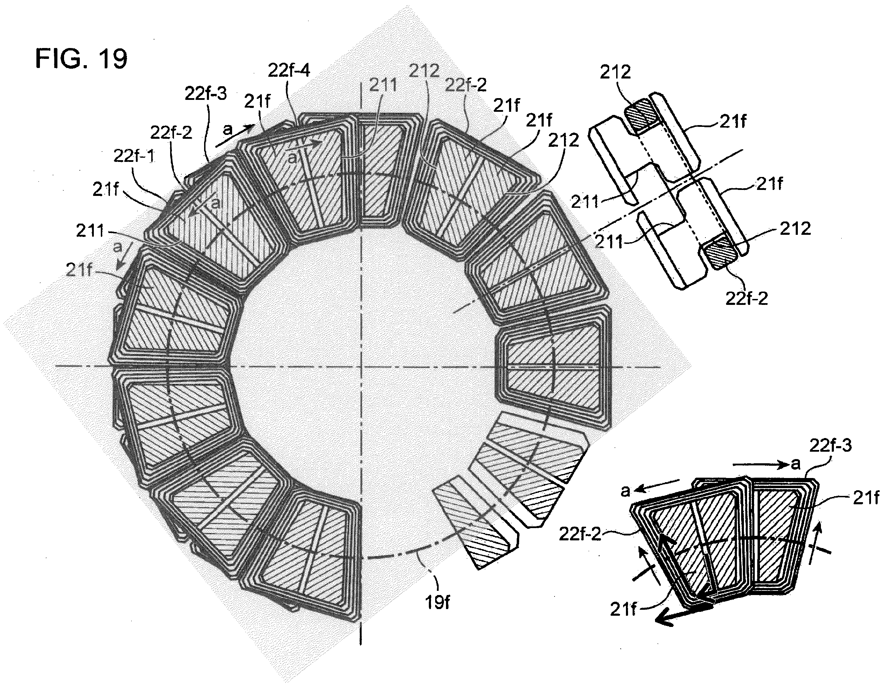

Additionally, according to a still further aspect, with reference to FIG. 17 , FIG. 18, and FIG. 19, in the above-described subsea buoy, the one-side first magnet array, the other side first magnet array, the one-side second magnet array, and the other side second magnet array are each formed with 2n (n is an integer not less than 3) of magnets arranged on a circumference of a predetermined fourth pitch circle at substantially equal intervals such that two magnets adjacent to each other in the circumferential direction have directions of polarization opposite to each other, the first power generation coil portion and the second power generation coil portion each have the number 4n of the coil iron cores arranged at substantially equal intervals on the circumference of the fourth pitch circle, and the coils include a first coil wound, of arbitrary five of first to fifth coil iron cores sequentially arranged in a circumferential direction in this order, around the first coil iron core and the second coil iron core adjacent to the first coil iron core, a second coil wound around the second coil iron core and the third coil iron core adjacent to the second coil iron core, a third coil wound around the third coil iron core and the fourth coil iron core adjacent to third coil iron core and arranged to be adjacent to the first coil in the circumferential direction, and a fourth coil wound around the fourth coil iron core and the fifth coil iron core adjacent to the fourth coil iron core and arranged to be adjacent to the second coil in the circumferential direction, in which the first coil and the second coil have the same winding direction to each other and are reverse to the winding direction of each of the third coil and the fourth coil to form wire connection, and the first coil to the fourth coil are wired in series in its entirety. An arrow a represents a winding direction of a coil.

In this configuration, a first line (e.g. a line including coil rows of the first coils and the third coils daisy-chain-connected) and a second line (e.g. a line including coil rows of the second coils and the fourth coils daisy-chain-connected) generate trapezoidal crossing magnetic fluxes which are deviated by a half phase. Addition of these fluxes composes a crossing magnetic flux with a triangular waveform. Time derivative of the flux obtains a rectangular wave electromotive force and rectifying the electromotive force obtains a direct current voltage (electric current). It can be said that a voltage generated by this configuration has an effective electric power (duty) close to 100% as compared with a sine wave voltage. This configuration includes a power generation structure suitable in a case where more importance is placed on total electric power than on voltage.

This application is based on Japanese Patent Application No. 2015-162717 filed on August 20, 2015, the entire contents of which are incorporated herein.

In order to express the present invention, the present invention has been appropriately and fully described according to the embodiments with reference to the drawings in the foregoing. However, it should be understood that those skilled in the art can easily modify and/or improve the above described embodiments. Accordingly, unless a form of modification or a form of improvement implemented by those skilled in the art departs from the scope of claims recited in claims, the form of modification or the form of improvement implemented by those skilled in the art is construed to be included in the scope of claims.

## Claims

1. A subsea buoy (Sa) comprising:
a power generation coil portion (20a) formed of a plurality of coil iron cores (21a) with coils (22a) wound around the coil iron cores;
a casing (31a) which houses the power generation coil portion;
a magnet array (5a) formed with a plurality of magnets arranged at a side opposite to the power generation coil portion with a part (13a) of a casing wall configuring the casing interposed therebetween so as to be magnetically coupled with the power generation coil portion;
a magnet holding member (15a) which holds the magnet array; and
a water wheel (4a) having a rotation shaft (41) formed to be rotatable by a water current, wherein
the part of the casing wall is formed of a nonmagnetic and insulative material, or a material having a high electric resistance, and
the magnet holding member is fixedly coupled to the rotation shaft.

2. The subsea buoy according to claim 1, comprising:
a filler (33a) filled in the casing and made of non-compressive and insulative liquid; and
a pressure adjustment mechanism (32) which adjusts a pressure in the casing.

3. The subsea buoy according to claim 1 or 2, further comprising:
a stator side yoke (11a,111) having an annular shape which is arranged on a side opposite to the part of the casing wall with the power generation coil portion in the casing interposed therebetween, wherein
the stator side yoke is formed of a wound iron core which is wrapped with a strip-shaped magnetic material, or a disk-shaped iron core having a plurality of slits (112) formed along at least one direction of a circumferential direction and a radial direction, and
the magnet holding member is a magnetic material.

4. The subsea buoy according to any one of claims 1 to 3, wherein
the water wheel includes:
a plurality of holding shafts (421) arranged at an outer side in a radial direction of the rotation shaft so as to be spaced apart in parallel to the rotation shaft;
a plurality of blade members (422) having a flat plate-shape held to the holding shafts so as to be rotatable around the holding shafts; and
abutting portions (45) which abut the respective blade members, each abutting portion being arranged at a position between the rotation shaft and each holding shaft so as to abut in the rotation of the blade member by the water current.

5. The subsea buoy according to any one of claims 1 to 4, wherein
the casing includes a casing main body portion, and a projection portion projecting from the casing main body portion,
the casing main body portion being formed to have a width gradually narrowing from a substantially central part of the casing main body portion to one end side and the other end side in a longitudinal direction in parallel to the water current in plan view, and
the projection portion including a first projection portion (133) integrally projecting from the substantially central part of the casing main body portion to one side in a width direction orthogonal to the longitudinal direction in plan view, and a second projection portion (134) projecting to the other side in the width direction, and wherein
the power generation coil portion includes a first power generation coil portion (20b-1) housed in the first projection portion, and a second power generation coil portion (20b-2) housed in the second projection portion,
the magnet array includes a first magnet array (5b-1) magnetically coupled to the first power generation coil portion, and a second magnet array (5b-2) magnetically coupled to the second power generation coil portion,
the magnet holding member includes a first magnet holding member which holds the first magnet array, and a second magnet holding member which holds the second magnet array, and
the water wheel includes a first water wheel (4b-1) coupled to the first magnet holding member, and a second water wheel (4b-2) coupled to the second magnet holding member, the first water wheel and the second water wheel being formed to rotate in directions opposite to each other when receiving a water current of the same flow direction.

6. The subsea buoy according to claim 5, wherein
the first magnet array includes a one-side first magnet array (5c-1) and the other side first magnet array (5c-2) arranged on both sides of the first power generation coil portion with the first power generation coil portion interposed therebetween,
the second magnet array includes a one-side second magnet array (5c-3) and the other side second magnet array (5c-4) arranged on both sides of the second power generation coil portion with the second power generation coil portion interposed therebetween,
the first magnet holding member includes a one-side first magnet array holding member (15c-1) which holds the one-side first magnet array, and the other side first magnet array holding member (15c-2) which holds the other side first magnet array,
the second magnet holding member includes a one-side second magnet array holding member (15c-3) which holds the one-side second magnet array, and the other side second magnet array holding member (15c-4) which holds the other side second magnet array,
the first water wheel includes a one-side first water wheel (4c-1) having a first rotation shaft coupled to the one-side first magnet array, and the other side first water wheel (4c-2) having a second rotation shaft coupled to the other side first magnet array,
the second water wheel includes a one-side second water wheel (4c-3) having a third rotation shaft coupled to the one-side second magnet array, and the other side second water wheel (4c-4) having a fourth rotation shaft coupled to the other side second magnet array,
the first rotation shaft and the second rotation shaft are formed with one first magnet array rotation shaft so as to be rotatably inserted through the first projection portion, and
the third rotation shaft and the fourth rotation shaft are formed with one second magnet array rotation shaft so as to be rotatably inserted through the second projection portion.

7. The subsea buoy according to claim 6, wherein
the one-side first magnet array, the other side first magnet array, the one-side second magnet array, and the other side second magnet array are each formed with 2n (n is an integer not less than 3) of magnets arranged on a circumference of a predetermined first pitch circle (19c) at substantially equal intervals such that two magnets adjacent to each other in the circumferential direction have directions of polarization opposite to each other,
the first power generation coil portion and the second power generation coil portion each have the number 2n of the coil iron cores arranged at substantially equal intervals on the circumference of the first pitch circle,
each coil iron core is configured with a magnetic material core, and
the coil (22c) forms a wire wound around each coil iron core (21c) such that winding directions become reverse to each other at two coil iron cores adjacent to each other in the circumferential direction.

8. The subsea buoy according to claim 6, wherein
the first power generation coil portion and the second power generation coil portion each have the number 2n (n is an integer not less than 3) of the coil iron cores of the same shape arranged at substantially equal intervals on a circumference of a predetermined second pitch circle (19d),
the coil forms a wire wound around each coil iron core such that winding directions become the same at two coil iron cores adjacent to each other in the circumferential direction,
the one-side first magnet array, the other side first magnet array, the one-side second magnet array, and the other side second magnet array are each formed with 4n of magnets arranged on the circumference of the second pitch circle at substantially equal intervals such that two magnets adjacent to each other in the circumferential direction have directions of polarization opposite to each other, and
the magnets are arranged to be at positions corresponding to every other coil iron core in the circumferential direction.

9. The subsea buoy according to claim 6, wherein
the one-side first magnet array, the other side first magnet array, the one-side second magnet array, and the other side second magnet array are each formed with 2n of magnets of the same shape arranged on a circumference of a predetermined third pitch circle (19e) at substantially equal intervals such that two magnets adjacent to each other in the circumferential direction have directions of polarization opposite to each other,
a number n (n is an even number) of sub-coil iron cores of the same shape are arranged at substantially equal intervals on the circumference of the third pitch circle so as to correspond to every other magnet of the number 2n of magnets, and
of the n sub-coil iron cores, with a number m (m is a submultiple of n and n = 2 × m) of the sub-coil iron cores successive in the circumferential direction set to be one coil iron core set, the respective coils form wires wound around the coil iron cores adjacent to each other in the circumferential direction so as to have the same winding direction.

10. The subsea buoy according to claim 6, wherein
the one-side first magnet array, the other side first magnet array, the one-side second magnet array, and the other side second magnet array are each formed with 2n (n is an integer not less than 3) of magnets arranged on a circumference of a predetermined fourth pitch circle (19f) at substantially equal intervals such that two magnets adjacent to each other in the circumferential direction have directions of polarization opposite to each other,
the first power generation coil portion and the second power generation coil portion each have the number 4n of the coil iron cores arranged at substantially equal intervals on the circumference of the fourth pitch circle, and
the coils include a first coil wound, of arbitrary five of first to fifth coil iron cores sequentially arranged in a circumferential direction in this order, around the first coil iron core and the second coil iron core adjacent to the first coil iron core, a second coil wound around the second coil iron core and the third coil iron core adjacent to the second coil iron core, a third coil wound around the third coil iron core and the fourth coil iron core adjacent to third coil iron core and arranged to be adjacent to the first coil in the circumferential direction, and a fourth coil wound around the fourth coil iron core and the fifth coil iron core adjacent to the fourth coil iron core and arranged to be adjacent to the second coil in the circumferential direction,
the first coil and the second coil having the same winding direction to each other and being reverse to the winding direction of each of the third coil and the fourth coil to form wire connection, and the first coil to the fourth coil being wired in series in its entirety.

## Patentansprüche

1. Unterwasserboje (Sa), umfassend:
einen Leistungserzeugungsspulenabschnitt (20a), ausgebildet aus einer Mehrzahl von Spuleneisenkernen (21a) mit um die Spuleneisenkerne herum gewundenen Spulen (22a);
ein Gehäuse (31a), welches den Leistungserzeugungsspulenabschnitt aufnimmt;
eine Magnetanordnung (5a), ausgebildet mit einer Mehrzahl von Magneten, angeordnet an einer Seite gegenüber dem Leistungserzeugungsspulenabschnitt, mit einem Teil (13a) einer Gehäusewand, das Gehäuse bildend, dazwischen eingefügt, um magnetisch mit dem Leistungserzeugungsspulenabschnitt gekoppelt zu sein; ein Magnethalteelement (15a), welches die Magnetanordnung hält; und
ein Wasserrad (4a) mit einer Rotationswelle (41), ausgebildet um durch einen Wasserstrom rotierbar zu sein,
wobei
der Teil der Gehäusewand von einem nichtmagnetischen und isolierenden Werkstoff ausgebildet ist oder einem Werkstoff mit hohem elektrischen Widerstand, und
das Magnethalteelement starr mit der Rotationswelle gekoppelt ist.

2. Unterwasserboje gemäß Anspruch 1, umfassend:
einen Füllstoff (33a), in das Gehäuse gefüllt und bestehend aus nichtkompressiver und isolierender Flüssigkeit; und
einen Druckanpassungsmechanismus (32), welcher einen Druck in dem Gehäuse anpasst.

3. Unterwasserboje gemäß Anspruch 1 oder 2, ferner umfassend:
ein Statorseitenjoch (11a, 111) mit einer ringförmigen Form, welches angeordnet ist auf einer Seite gegenüber dem Teil der Gehäusewand, mit dem Leistungserzeugungsspulenabschnitt in dem Gehäuse dazwischen eingefügt, wobei
das Statorseitenjoch aus einem gewickelten Eisenkern ausgebildet ist, welcher mit einem streifenförmigen magnetischen Werkstoff eingehüllt ist, oder aus einem scheibenförmigen Eisenkern mit einer Mehrzahl von Schlitzen (112) ausgebildet entlang mindestens einer Richtung einer Umfangsrichtung und einer radialen Richtung, und
das Magnethalteelement ein magnetisches Material ist.

4. Unterwasserboje gemäß einem der Ansprüche 1 bis 3, wobei das Wasserrad beinhaltet:
eine Mehrzahl von Haltewellen (421), an einer Außenseite in einer radialen Richtung der Rotationswelle angeordnet, um parallel zu der Rotationswelle beabstandet zu sein;
eine Mehrzahl von Schaufelelementen (422) mit einer flachen Plattenform, die an die Haltewellen gehalten sind, um um die Haltewellen herum rotierbar zu sein; und
Anliegeabschnitte (45), welche an den jeweiligen Blattelementen anliegen, wobei jeder Anliegeabschnitt an einer Position zwischen der Rotationswelle und jeder Haltewelle angeordnet ist, um in der Rotation des Blattelements durch den Wasserstrom anzuliegen.

5. Unterwasserboje gemäß einem der Ansprüche 1 bis 4, wobei
das Gehäuse einen Gehäusehauptkörperabschnitt beinhaltet und wobei ein Vorsprungsabschnitt von dem Gehäusehauptkörperabschnitt hervorspringt,
der Gehäusehauptkörperabschnitt ausgebildet ist, um eine sich zunehmend verjüngende Breite von einem im Wesentlichen zentralen Teil des Gehäusehauptkörperabschnitts zu einer Endseite und der anderen Endseite in einer Längsrichtung parallel zu dem Wasserstrom in Draufsicht aufzuweisen, und
der Vorsprungsabschnitt einen ersten Vorsprungsabschnitt (133) beinhaltet, integral hervorspringend von dem im Wesentlichen zentralen Teil des Gehäusehauptkörperabschnitts zu einer Seite in eine Breitenrichtung, orthogonal zu der Längsrichtung in Draufsicht, und einen zweiten Vorsprungsabschnitt (134), hervorspringend zu der anderen Seite in die Breitenrichtung, und wobei
der Leistungserzeugungsspulenabschnitt einen ersten Leistungserzeugungsspulenabschnitt (20b-1) beinhaltet, aufgenommen in dem ersten Vorsprungsabschnitt und einen zweiten Leistungserzeugungsspulenabschnitt (20b-2), aufgenommen in dem zweiten Vorsprungsabschnitt,
die Magnetanordnung eine erste Magnetanordnung (5b-1) beinhaltet, magnetisch gekoppelt zu dem ersten Leistungserzeugungsspulenabschnitt, und eine zweite Magnetanordnung (5b-2), magnetisch zu dem zweiten Leistungserzeugungsspulenabschnitt gekoppelt,
das Magnethalteelement ein erstes Magnethaltelement beinhaltet, welches die erste Magnetanordnung hält, und ein zweites Magnethaltelement, welches die zweite Magnetanordnung hält, und
das Wasserrad ein erstes Wasserrad (4b-1) beinhaltet, gekoppelt mit dem ersten Magnethalteelement, und ein zweites Wasserrad (4b-2), gekoppelt mit dem zweiten Magnethalteelement, wobei das erste Wasserrad und das zweite Wasserrad ausgebildet sind, um in einander entgegengesetzte Richtungen zu rotieren, wenn ein Wasserstrom derselben Stromrichtung aufgenommen wird.

6. Unterwasserboje gemäß Anspruch 5, wobei
die erste Magnetanordnung eine erste Magnetanordnung (5c-1) der einen Seite beinhaltet und die erste Magnetanordnung (5c-2) der anderen Seite, auf beiden Seiten des ersten Leistungserzeugungsspulenabschnitts angeordnet, mit dem ersten Leistungserzeugungsspulenabschnitt dazwischen eingefügt,
die zweite Magnetanordnung eine zweite Magnetanordnung (5c-3) der einen Seite beinhaltet und die zweite Magnetanordnung (5c-4) der anderen Seite, auf beiden Seiten des zweiten Leistungserzeugungsspulenabschnitts angeordnet, mit dem zweiten Leistungserzeugungsspulenabschnitt dazwischen eingefügt,
das erste Magnethalteelement ein erstes Magnetanordnungshaltelement (15c-1) der einen Seite beinhaltet, welches die erste Magnetanordnung der einen Seite hält, und das erste Magnetanordnungshaltelement (15c-2) der anderen Seite, welches die erste Magnetanordnung der anderen Seite hält,
das zweite Magnethalteelement ein zweites Magnetanordnungshalteelement (15c-3) der einen Seite beinhaltet, welches die zweite Magnetanordnung der einen Seite hält, und das zweite Magnetanordnungshaltelement (15c-4) der anderen Seite, welches die zweite Magnetanordnung der anderen Seite hält,
das erste Wasserrad ein erstes Wasserrad (4c-1) der einen Seite beinhaltet, eine erste Rotationswelle aufweisend, mit der ersten Magnetanordnung der einen Seite gekoppelt, und das erste Wasserrad (4c-2) der anderen Seite, eine zweite Rotationswelle aufweisend, mit der ersten Magnetanordnung der anderen Seite gekoppelt,
das zweite Wasserrad ein zweites Wasserrad (4c-3) der einen Seite beinhaltet, eine dritte Rotationswelle aufweisend, mit der zweiten Magnetanordnung der einen Seite gekoppelt, und das zweite Wasserrad (4c-4) der anderen Seite, eine vierte Rotationswelle aufweisend, mit der zweiten Magnetanordnung der anderen Seite gekoppelt,
die erste Rotationswelle und die zweite Rotationswelle mit einer ersten Magnetanordnungsrotationswelle ausgebildet sind, um rotierbar durch den ersten Vorsprungsabschnitt eingeführt zu werden, und
die dritte Rotationswelle und die vierte Rotationswelle mit einer zweiten Magnetanordnungsrotationswelle ausgebildet sind, um rotierbar durch den zweiten Vorsprungsabschnitt eingeführt zu werden.

7. Unterwasserboje gemäß Anspruch 6, wobei
die erste Magnetanordnung der einen Seite, die erste Magnetanordnung der anderen Seite, die zweite Magnetanordnung der einen Seite und die zweite Magnetanordnung der anderen Seite jeweils mit 2n (n ist eine ganze Zahl nicht geringer als 3) Magneten ausgebildet sind, angeordnet auf einem Umfang eines vorbestimmten ersten Halbkreises (19c), in im Wesentlichen gleichen Intervallen, so dass zwei zueinander benachbarte Magnete in der Umfangsrichtung einander entgegengesetzte Polarisationsrichtungen aufweisen,
der erste Leistungserzeugungsspulenabschnitt und der zweite Leistungserzeugungsspulenabschnitt jeweils die Zahl 2n der Spuleneisenkerne aufweisen, angeordnet in im Wesentlichen gleichen Intervallen auf dem Umfang des ersten Halbkreises,
jeder Spuleneisenkern mit einem magnetischen Materialkern gebildet ist, und die Spule (22c) einen Draht ausbildet, um jeden Spuleneisenkern (21c) herumgewickelt, so dass Wicklungsrichtungen an zwei Spuleneisenkernen, benachbart zueinander in der Umfangsrichtung, zueinander umgekehrt werden.

8. Unterwasserboje gemäß Anspruch 6, wobei
der erste Leistungserzeugungsspulenabschnitt und der zweite Leistungserzeugungsspulenabschnitt jeweils die Zahl 2n (n ist eine ganze Zahl nicht geringer als 3) der Spuleneisenkerne derselben Form aufweisen, angeordnet in im Wesentlichen gleichen Intervallen auf einem Umfang eines vorbestimmten zweiten Halbkreises (19d),
die Spule einen Draht ausbildet, um jeden Spuleneisenkern herumgewickelt, so dass Wicklungsrichtungen an zwei Spuleneisenkernen, benachbart zueinander in der Umfangsrichtung, dieselben werden,
die erste Magnetanordnung der einen Seite, die erste Magnetanordnung der anderen Seite, die zweite Magnetanordnung der einen Seite und die zweite Magnetanordnung der anderen Seite jeweils mit 4n Magneten ausgebildet sind, auf dem Umfang des zweiten Halbkreises in im Wesentlichen gleichen Intervallen angeordnet, so dass zwei zueinander benachbarte Magnete in der Umfangsrichtung einander entgegengesetzte Polarisationsrichtungen aufweisen,
die Magnete angeordnet sind, um in Positionen entsprechend jedem anderen Spuleneisenkern in der Umfangsrichtung zu entsprechen.

9. Unterwasserboje gemäß Anspruch 6, wobei
die erste Magnetanordnung der einen Seite, die erste Magnetanordnung der anderen Seite, die zweite Magnetanordnung der einen Seite und die zweite Magnetanordnung der anderen Seite jeweils mit 2n Magneten derselben Form ausgebildet sind, angeordnet auf einem Umfang eines vorbestimmten dritten Halbkreises (19e), in im Wesentlichen gleichen Intervallen, so dass zwei zueinander benachbarte Magnete in der Umfangsrichtung einander entgegengesetzte Polarisationsrichtungen aufweisen,
eine Zahl n (n ist eine gerade Zahl) von Unterspuleneisenkernen derselben Form in im Wesentlichen gleichen Intervallen auf dem Umfang des dritten Halbkreises angeordnet sind, um jedem anderen Magneten der Zahl 2n von Magneten zu entsprechen, und
von den n Unterspuleneisenkernen, mit einer Zahl m (m ist ein Bruchteil von n und n = 2 x m) der Unterspuleneisenkerne aufeinanderfolgend in der Umfangsrichtung, festgelegt als ein Spuleneisenkernsatz, bilden die jeweiligen Spulen Drähte aus, herumgewickelt um die zueinander benachbarten Spuleneisenkerne in der Umfangsrichtung, um dieselbe Wicklungsrichtung aufzuweisen.

10. Unterwasserboje gemäß Anspruch 6, wobei
die erste Magnetanordnung der einen Seite, die erste Magnetanordnung der anderen Seite, die zweite Magnetanordnung der einen Seite und die zweite Magnetanordnung der anderen Seite jeweils mit 2n (n ist eine ganze Zahl nicht geringer als 3) Magneten ausgebildet sind, angeordnet auf einem Umfang eines vorbestimmten vierten Halbkreises (19f), in im Wesentlichen gleichen Intervallen, so dass die zwei zueinander benachbarten Magnete in der Umfangsrichtung einander entgegengesetzte Polarisationsrichtungen aufweisen,
der erste Leistungserzeugungsspulenabschnitt und der zweite Leistungserzeugungsspulenabschnitt jeweils die Zahl 4n der Spuleneisenkerne aufweisen, angeordnet in im Wesentlichen gleichen Intervallen auf dem Umfang des vierten Halbkreises, und
die Spulen eine erste Spule beinhalten, von beliebigen fünf von ersten bis fünften Spuleneisenkernen, nacheinander in einer Umfangsrichtung in dieser Reihenfolge angeordnet, um den ersten Spuleneisenkern gewickelt und den zweiten Spuleneisenkern, benachbart zu dem ersten Spuleneisenkern, eine zweite Spule, um den zweiten Spuleneisenkern gewickelt und den dritten Spuleneisenkern, benachbart zu dem zweiten Spuleneisenkern, eine dritte Spule gewickelt um den dritten Spuleneisenkern und den vierten Spuleneisenkern, benachbart zu dem dritten Spuleneisenkern, und angeordnet, um zu der ersten Spule in Umfangsrichtung benachbart zu sein, und eine vierte Spule, gewunden um den vierten Spuleneisenkern und den fünften Spuleneisenkern, benachbart zu dem vierten Spuleneisenkern, und angeordnet, um zu der zweiten Spule in Umfangsrichtung benachbart zu sein,
die erste Spule und die zweite Spule dieselbe Wicklungsrichtung zueinander aufweisen und umgekehrt zu der Wicklungsrichtung jeder der dritten Spule und vierten Spule sind, um eine Drahtverbindung auszubilden, und die erste Spule zu der vierten Spule in Reihe in ihrer Gesamtheit verdrahtet ist.

## Revendications

1. Bouée sous-marine (Sa) comprenant :
une portion de bobine de génération de puissance (20a) formée d'une pluralité de noyaux de fer de bobine (21a) avec des bobines (22a) enroulées autour des noyaux de fer de bobine ;
un boîtier (31a) qui héberge la portion de bobine de génération de puissance ;
un réseau d'aimants (5a) formé d'une pluralité d'aimants agencés sur un côté opposé à la portion de bobine de génération de puissance avec une partie (13a) d'une paroi de boîtier configurant le boîtier interposée entre eux de manière à être magnétiquement couplée à la portion de bobine de génération de puissance ;
un élément de maintien d'aimant (15a) qui maintient le réseau d'aimants ; et
une roue hydraulique (4a) ayant un arbre de rotation (41) formé pour être rotatif par un courant hydraulique, dans laquelle
la partie de la paroi de boîtier est formée d'un matériau non magnétique et isolant ou d'un matériau ayant une résistance électrique élevée, et
l'élément de maintien d'aimant est couplé de manière fixe à l'arbre de rotation.

2. Bouée sous-marine selon la revendication 1, comprenant :
une charge (33a) versée dans le boîtier et constituée de liquide non compressif et isolant ; et
un mécanisme d'ajustement de pression (32) qui ajuste une pression dans le boîtier.

3. Bouée sous-marine selon la revendication 1 ou 2, comprenant en outre :
une culasse côté stator (11a, 111) ayant une forme annulaire qui est agencée sur un côté opposé à la partie de la paroi de boîtier avec la portion de bobine de génération de puissance dans le boîtier interposée entre elles, dans laquelle
la culasse côté stator est formée d'un noyau de fer enroulé qui est enveloppé d'un matériau magnétique en forme de bande ou d'un noyau de fer en forme de disque ayant une pluralité de fentes (112) formées le long d'au moins une direction d'une direction circonférentielle et d'une direction radiale, et
l'élément de maintien d'aimant est un matériau magnétique.

4. Bouée sous-marine selon l'une quelconque des revendications 1 à 3, dans laquelle
la roue hydraulique inclut :
une pluralité d'arbres de maintien (421) agencés sur un côté externe dans une direction radiale de l'arbre de rotation de manière à être espacés parallèlement à l'arbre de rotation ;
une pluralité d'éléments de pale (422) ayant une forme de plaque plate maintenus aux arbres de maintien de manière à être rotatifs autour des arbres de maintien ; et
des portions de butée (45) qui butent contre les éléments de pale respectifs, chaque portion de butée étant agencée à une position entre l'arbre de rotation et chaque arbre de maintien de manière à buter dans la rotation de l'élément de pale par le courant hydraulique.

5. Bouée sous-marine selon l'une quelconque des revendications 1 à 4, dans laquelle
le boîtier inclut une portion de corps principal de boîtier et une portion de saillie faisant saillie depuis la portion de corps principal de boîtier,
la portion de corps principal de boîtier étant formée pour avoir une largeur rétrécissant progressivement d'une partie essentiellement centrale de la portion de corps principal de boîtier à un côté d'extrémité et l'autre côté d'extrémité dans une direction longitudinale parallèlement au courant hydraulique dans une vue en plan, et
la portion de saillie incluant une première portion de saillie (133) faisant saillie intégralement de la partie essentiellement centrale de la portion de corps principal de boîtier à un côté dans un sens de la largeur orthogonal à la direction longitudinale dans une vue en plan, et une seconde portion de saillie (134) faisant saillie vers l'autre côté dans le sens de la largeur, et dans laquelle la portion de bobine de génération de puissance inclut une première portion de bobine de génération de puissance (20b-1) hébergée dans la première portion de saillie et une seconde portion de bobine de génération de puissance (20b-2) hébergée dans la seconde portion de saillie,
le réseau d'aimants inclut un premier réseau d'aimants (5b-1) magnétiquement couplé à la première portion de bobine de génération de puissance et un second réseau d'aimants (5b-2) magnétiquement couplé à la seconde portion de bobine de génération de puissance,
l'élément de maintien d'aimant inclut un premier élément de maintien d'aimant qui maintient le premier réseau d'aimants et un second élément de maintien d'aimant qui maintient le second réseau d'aimants, et
la roue hydraulique inclut une première roue hydraulique (4b-1) couplée au premier élément de maintien d'aimant et une seconde roue hydraulique (4b-2) couplée au second élément de maintien d'aimant, la première roue hydraulique et la seconde roue hydraulique étant formées pour tourner dans des directions opposées l'une à l'autre lors de la réception d'un courant hydraulique de la même direction d'écoulement.

6. Bouée sous-marine selon la revendication 5, dans laquelle
le premier réseau d'aimants inclut un premier réseau d'aimants d'un côté (5c-1) et un premier réseau d'aimants de l'autre côté (5c-2) agencés des deux côtés de la première portion de bobine de génération de puissance avec la première portion de bobine de génération de puissance interposée entre eux,
le second réseau d'aimants inclut un second réseau d'aimants d'un côté (5c-3) et un second réseau d'aimants de l'autre côté (5c-4) agencés des deux côtés de la seconde portion de bobine de génération de puissance avec la seconde portion de bobine de génération de puissance interposée entre eux,
le premier élément de maintien d'aimant inclut un premier élément de maintien de réseau d'aimants d'un côté (15c-1) qui maintient le premier réseau d'aimants d'un côté et un premier élément de maintien de réseau d'aimants de l'autre côté (15c-2) qui maintient le premier réseau d'aimants de l'autre côté,
le second élément de maintien d'aimant inclut un second élément de maintien de réseau d'aimants d'un côté (15c-3) qui maintient le second réseau d'aimants d'un côté et un second élément de maintien de réseau d'aimants de l'autre côté (15c-4) qui maintient le second réseau d'aimants de l'autre côté,
la première roue hydraulique inclut une première roue hydraulique d'un côté (4c-1) ayant un premier arbre de rotation couplé au premier réseau d'aimants d'un côté et une première roue hydraulique de l'autre côté (4c-2) ayant un deuxième arbre de rotation couplé au premier réseau d'aimants de l'autre côté, la seconde roue hydraulique inclut une seconde roue hydraulique d'un côté (4c-3) ayant un troisième arbre de rotation couplé au second réseau d'aimants d'un côté et une seconde roue hydraulique de l'autre côté (4c-4) ayant un quatrième arbre de rotation couplé au second réseau d'aimants de l'autre côté,
le premier arbre de rotation et le deuxième arbre de rotation sont formés d'un premier arbre de rotation de réseau d'aimants de manière à être insérés par rotation à travers la première portion de saillie, et
le troisième arbre de rotation et le quatrième arbre de rotation sont formés d'un second arbre de rotation de réseau d'aimants de manière à être insérés par rotation à travers la seconde portion de saillie.

7. Bouée sous-marine selon la revendication 6, dans laquelle
le premier réseau d'aimants d'un côté, le premier réseau d'aimants de l'autre côté, le second réseau d'aimants d'un côté et le second réseau d'aimants de l'autre côté sont chacun formés avec 2n (n est un entier qui n'est pas inférieur à 3) d'aimants agencés sur une circonférence d'un premier cercle primitif prédéterminé (19c) à des intervalles essentiellement égaux tels que deux aimants adjacents l'un à l'autre dans la direction circonférentielle ont des directions de polarisation opposées l'une à l'autre,
la première portion de bobine de génération de puissance et la seconde portion de bobine de génération de puissance ont chacune le nombre 2n des noyaux de fer de bobine agencés à des intervalles essentiellement égaux sur la circonférence du premier cercle primitif,
chaque noyau de fer de bobine est configuré avec un noyau de matériau magnétique, et
la bobine (22c) forme un fil enroulé autour de chaque noyau de fer de bobine (21c) de sorte que des directions d'enroulement deviennent l'inverse l'une de l'autre au niveau de deux noyaux de fer de bobine adjacents l'un à l'autre dans la direction circonférentielle.

8. Bouée sous-marine selon la revendication 6, dans laquelle
la première portion de bobine de génération de puissance et la seconde portion de bobine de génération de puissance ont chacune le nombre 2n (n est un entier qui n'est pas inférieur à 3) des noyaux de fer de bobine de la même forme agencés à des intervalles essentiellement égaux sur une circonférence d'un deuxième cercle primitif prédéterminé (19d),
la bobine forme un fil enroulé autour de chaque noyau de fer de bobine de sorte que des directions d'enroulement deviennent identiques au niveau de deux noyaux de fer de bobine adjacents l'un à l'autre dans la direction circonférentielle,
le premier réseau d'aimants d'un côté, le premier réseau d'aimants de l'autre côté, le second réseau d'aimants d'un côté et le second réseau d'aimants de l'autre côté sont chacun formés avec 4n d'aimants agencés sur la circonférence du deuxième cercle primitif à des intervalles essentiellement égaux tels que deux aimants adjacents l'un à l'autre dans la direction circonférentielle ont des directions de polarisation opposées l'une à l'autre, et
les aimants sont agencés pour être à des positions correspondant à un noyau de fer de bobine sur deux dans la direction circonférentielle.

9. Bouée sous-marine selon la revendication 6, dans laquelle
le premier réseau d'aimants d'un côté, le premier réseau d'aimants de l'autre côté, le second réseau d'aimants d'un côté et le second réseau d'aimants de l'autre côté sont chacun formés avec 2n d'aimants de la même forme agencés sur une circonférence d'un troisième cercle primitif prédéterminé (19e) à des intervalles essentiellement égaux tels que deux aimants adjacents l'un à l'autre dans la direction circonférentielle ont des directions de polarisation opposées l'une à l'autre,
un nombre n (n est un nombre pair) de noyaux de fer de bobine secondaire de la même forme sont agencés à des intervalles essentiellement égaux sur la circonférence du troisième cercle primitif de manière à correspondre à un aimant sur deux du nombre 2n d'aimants, et
parmi les n noyaux de fer de bobine secondaire, avec un nombre m (m est un sous-multiple de n et n = 2 x m) des noyaux de fer de bobine secondaire successifs dans la direction circonférentielle réglé pour être un ensemble de noyaux de fer de bobine, les bobines respectives forment des fils enroulés autour des noyaux de fer de bobine adjacents les uns aux autres dans la direction circonférentielle de manière à avoir la même direction d'enroulement.

10. Bouée sous-marine selon la revendication 6, dans laquelle
le premier réseau d'aimants d'un côté, le premier réseau d'aimants de l'autre côté, le second réseau d'aimants d'un côté et le second réseau d'aimants de l'autre côté sont chacun formés avec 2n (n est un entier qui n'est pas inférieur à 3) d'aimants agencés sur une circonférence d'un quatrième cercle primitif prédéterminé (19f) à des intervalles essentiellement égaux tels que deux aimants adjacents l'un à l'autre dans la direction circonférentielle ont des directions de polarisation opposées l'une à l'autre,
la première portion de bobine de génération de puissance et la seconde portion de bobine de génération de puissance ont chacune le nombre 4n des noyaux de fer de bobine agencés à des intervalles essentiellement égaux sur la circonférence du quatrième cercle primitif, et
les bobines incluent une première bobine enroulée, parmi cinq noyaux arbitraires du premier au cinquième noyaux de fer de bobine agencés de manière séquentielle dans une direction circonférentielle dans cet ordre, autour du premier noyau de fer de bobine et du deuxième noyau de fer de bobine adjacent au premier noyau de fer de bobine, une deuxième bobine enroulée autour du deuxième noyau de fer de bobine et du troisième noyau de fer de bobine adjacent au deuxième noyau de fer de bobine, une troisième bobine enroulée autour du troisième noyau de fer de bobine et du quatrième noyau de fer de bobine adjacent au troisième noyau de fer de bobine et agencée pour être adjacente à la première bobine dans la direction circonférentielle, et une quatrième bobine enroulée autour du quatrième noyau de fer de bobine et du cinquième noyau de fer de bobine adjacent au quatrième noyau de fer de bobine et agencée pour être adjacente à la deuxième bobine dans la direction circonférentielle,
la première bobine et la deuxième bobine ayant la même direction d'enroulement l'une que l'autre et étant inverse à la direction d'enroulement de chacune de la troisième bobine et la quatrième bobine pour former une connexion de fils, et la première bobine à la quatrième bobine étant câblées en série dans leur intégralité.
